# EUROPEAN PATENT SPECIFICATION

(11) **EP 4 497 652 B1**
(45) Date of publication and mention of the grant of the patent: **08.04.2026**
(21) Application number: 22872258.3
(22) Date of filing: 14.11.2022
(51) Int. Cl.: B60T 13/66, B60T 13/68, B60T 17/22, B60T 8/17, B60T 13/40, B61H 13/00, B60T 15/02, B61H 13/20

(54) **LOCOMOTIVE BRAKE CONTROL SYSTEM AND CONTROL METHOD**
LOKOMOTIVENBREMSSTEUERSYSTEM UND STEUERVERFAHREN
SYSTÈME DE COMMANDE ET PROCÉDÉ DE COMMANDE DE FREIN DE LOCOMOTIVE

(30) Priority: 30.05.2022 CN 202210596432
(43) Date of publication of application: 29.01.2025
(73) Proprietor: CRRC BRAKING SYSTEM CO., LTD., Qingdao, Shandong 266000 (CN)
(72) Inventor: ZHU, Guanwen, Qingdao, Shandong 266000 (CN); LV, Xiao, Qingdao, Shandong 266000 (CN); WANG, Lingjun, Qingdao, Shandong 266000 (CN); REN, Xiangjie, Qingdao, Shandong 266000 (CN); WU, Junliang, Qingdao, Shandong 266000 (CN); WANG, Chengcheng, Qingdao, Shandong 266000 (CN); XIA, Jun, Qingdao, Shandong 266000 (CN); WANG, Shuaishuai, Qingdao, Shandong 266000 (CN); ZHANG, Maosong, Qingdao, Shandong 266000 (CN)
(74) Representative: J A Kemp LLP
(86) International application number: PCT/CN2022/131670
(87) International publication number: WO 2023/046215

(56) References cited:
- CN-A- 104 442 903
- CN-A- 110 065 521
- CN-A- 113 002 584
- CN-A- 113 002 584
- CN-A- 114 750 737
- CN-B- 110 065 521
- US-A- 4 755 803
- US-A1- 2018 265 065
- US-A1- 2021 309 191

## Description

### TECHNICAL FIELD

The present application relates to the technical field of railway locomotive brake, and in particular to a locomotive brake control system and a control method.

### BACKGROUND ART

In the lead mode, the locomotive brake control system controls brake and release of the train, lead unit and trail unit respectively by controlling pressures of the brake pipe, brake cylinder and brake cylinder equalizing pipe. In the trail mode, the trail unit responds to the brake and release control of the lead unit by the brake cylinder equalizing pipe, and the brake and release of the trail unit should be coordinated with the brake and release of the lead unit. In the dead mode, the trail unit responds to the brake and release control of the lead unit by the brake pipe. If the brake cylinder pressure of the trail unit is inconsistent with the brake cylinder pressure of the lead unit, it will cause an increase in the coupler gap between the trail unit and the lead unit, which will cause the longitudinal impulse of the train, and in severe cases, it may result in coupler separation, affecting the safety of train operation.

At present, the main types of domestic locomotive brake control system can realize the above functions under normal operating conditions. Some types of locomotive brake control system can realize the control of the brake cylinder equalizing pipe pressure even when there are faults in the brake cylinder equalizing pipe control in the lead mode through redundant design. However, in the lead mode, when the brake control system is powered off, the brake control system is in the pneumatic position, or the brake cylinder control and the brake cylinder equalizing pipe control fail simultaneously, the brake cylinder equalizing pipe pressure and the brake cylinder pressure of the lead unit cannot be coordinated. The Chinese patent application CN111661025A discloses a method and device for controlling brake cylinder equalizing pipe pressure of locomotive brake control system, which requires additional installation of air backup interlocking devices on the locomotive and the existing brake control system, changing the existing design of the locomotive, adding valve components, and increasing the complexity of the brake control system.

CN113002584A discloses locomotive brake cylinder and average pipe pressure control system and control method, and the system comprises an electronic distribution valve, an emergency pressurization bypass device, an independent brake pre-control device, a local and supplementary switching device, an average pipe relay valve, an automatic brake relay valve, an independent brake relay valve, and a first two-way valve, a second two-way valve, a third two-way valve and a fourth two-way valve which are used for transmitting the pressure among the devices.

### SUMMARY

The purpose of the present application is to solve one of the above technical problems and provide a locomotive brake control system and control method.

The invention is set out in the appended set of claims.

Compared with the prior art, the advantages and positive effects of the present application are as follows.

The locomotive brake control system and control method proposed in the present application can achieve coordination between the brake cylinder equalizing pipe and the brake cylinder pressure of the lead unit when the brake control system is powered off, or the brake control system is in the pneumatic position, or the brake cylinder control and the brake cylinder equalizing pipe control fail at the same time in the lead mode. In addition, in the trail mode, the coordination between the brake cylinder equalizing pipe and the brake cylinder pressure of the lead unit the brake system can be achieved when brake control system is powered off or the brake cylinder control and the brake cylinder equalizing pipe control fail at the same time, thereby improving the consistency of the brake and release between the lead unit and the trail unit and enhancing the stability of train operation. Moreover, in the dead mode, there is no need to discharge the brake cylinder equalizing pipe pressure, there is no need to increase the interfaces between the locomotive and the brake system, or increase the valve components, and the complexity of the brake control system will not be increased.

### BRIEF DESCRIPTION OF THE DRAWINGS

Fig. 1a is a schematic structural diagram of a changeover cock of a locomotive brake control system provided by an embodiment of the present application;
Fig. 1b is a schematic structural diagram of a first solenoid valve of a locomotive brake control system provided by an embodiment of the present application;
Fig. 1c is a schematic structural diagram of a two-way valve of a locomotive brake control system provided by an embodiment of the present application;
Fig.1d is a schematic structural diagram of a brake cylinder relay valve of a locomotive brake control system provided by an embodiment of the present application;
Fig. 1e is a schematic structural diagram of a second solenoid valve of a locomotive brake control system provided in an embodiment of the present application;
Fig. 1f is a schematic structural diagram of a third solenoid valve of a locomotive brake control system provided in an embodiment of the present application;
Fig. 1g is a schematic structural diagram of an brake cylinder equalizing pipe relay valve of a locomotive brake control system provided in an embodiment of the present application;
Fig. 1h is a schematic structural diagram of a pneumatic control valve of a locomotive brake control system provided by an embodiment of the present application;
Fig. 2 is a first schematic structural diagram of a locomotive brake control system provided by an embodiment of the present application, wherein the changeover cock is in the cut-in position;
Fig. 3 is a second schematic structural diagram of a locomotive brake control system provided by an embodiment of the present application, wherein the changeover cock is in the cut-in position;
Fig. 4 is a third schematic structural diagram of a locomotive brake control system provided by an embodiment of the present application, wherein the changeover cock is in the cut-off position;
Fig. 5 is a fourth schematic structural diagram of a locomotive brake control system provided by an embodiment of the present application, wherein the changeover cock is in the cut-off position.

Wherein, the reference signs are as follows:
001, brake cylinder control system; 1, main reservoir pipe; 2, mechanical distribution valve pressure; 3, atmosphere; 5, brake cylinder pressure; 101, changeover cock; 1011, inlet port of changeover cock; 1012, outlet port of changeover cock; 1013, exhaust port of changeover cock; 102, brake cylinder pressure pre-control unit; 1021, inlet port of brake cylinder pressure pre-control unit; 1022, outlet port of brake cylinder pressure pre-control unit; 103, first solenoid valve; 1031, first inlet port of first solenoid valve; 1032, second inlet port of first solenoid valve; 1033, outlet port of first solenoid valve; 104, two-way valve; 1041, first inlet port of two-way valve; 1042, second inlet port of two-way valve; 1043, outlet port of two-way valve; 105, brake cylinder relay valve; 1051, pre-control port of brake cylinder relay valve; 1052, inlet port of brake cylinder relay valve; 1053, outlet port of brake cylinder relay valve; 1054, exhaust port of brake cylinder relay valve; 002, brake cylinder equalizing pipe control system; 106, brake cylinder equalizing pipe pressure pre-control unit; 1061, inlet port of brake cylinder equalizing pipe pressure pre-control unit; 1062, outlet port of brake cylinder equalizing pipe pressure pre-control unit; 107, second solenoid valve; 1071, first inlet port of second solenoid valve; 1072, second inlet port of second solenoid valve; 1073, outlet port of second solenoid valve; 108, third solenoid valve; 1081, inlet port of third solenoid valve ; 1082, outlet port of third solenoid valve; 1083, exhaust port of third solenoid valve; 109, brake cylinder equalizing pipe relay valve; 1091, pre-control port of brake cylinder equalizing pipe relay valve; 1092, inlet port of brake cylinder equalizing pipe relay valve; 1093, exhaust port of brake cylinder equalizing pipe relay valve; 1094, outlet port of brake cylinder equalizing pipe relay valve; 110, pneumatic control valve; 1101, inlet port of pneumatic control valve; 1102, pre-control port of pneumatic control valve; 1103, outlet port of pneumatic control valve; 8, brake cylinder equalizing pipe.

### DETAILED DESCRIPTION OF EMBODIMENTS

In order to make the purpose, technical solutions and advantages of the present application clearer, the present application will be described and illustrated below in conjunction with the accompanying drawings and embodiments. It should be understood that the specific embodiments described herein are only used to explain the present application and are not intended to limit the present application. Based on the embodiments provided in the present application, all other embodiments obtained by those of ordinary skill in the art without creative work are within the scope of protection of the present application.

Apparently, the accompanying drawings in the following description are merely some of the examples or embodiments of the present application. For a person of ordinary skill in the art, without paying any creative effort, the present application can also be applied to other similar circumstances according to these accompanying drawings. In addition, it should also be understood that, although the effort made in the development process may be complicated and tedious, for a person of ordinary skill in the art related to the disclosure of the present application, some modifications in design, manufacture or production based on the technical contents disclosed by the present application are merely conventional technical means, and it should not be understood that the disclosure of the present application is insufficient.

The term "embodiment" herein means that specific features, structures or characteristics described with reference to an embodiment can be comprised in at least one embodiment of the present application. The appearance of "embodiment" in various places of the description neither necessarily refers to the same embodiment, nor means an independent or alternative embodiment that is mutually exclusive with other embodiments. It should be explicitly and implicitly understood by those skilled in the art that an embodiment can be combined with other embodiments if not conflicted.

Unless otherwise defined, the technical terms or scientific terms involved in the present application should have their ordinary meanings as understood by a person of ordinary skill in the technical field to which the present application pertains. Similar words such as "a", "an", "one" and "the" involved in the present application do not mean any quantity limitation, and may mean a singular or plural form. The terms such as "comprise", "comprise" and "have" and variants thereof involved in the present application are intended to cover non-exclusive inclusion. For example, a process, method, system, product or device comprising a series of steps or modules (units) is not limited to the listed steps or units, and may optionally comprise steps or units that are not listed or optionally comprise other steps or units intrinsic to this process, method, product or device. Similar words such as "connect", "link" and "couple" involved in the present application are not limited to physical or mechanical connection, and may comprise electrical connection, regardless of direct or indirect connection. The term "a plurality of" involved in the present application means two or more. The terms "first", "second", "third" and the like involved in the present application are merely for distinguishing similar objects, rather than indicating a specific order for the objects.

The trail unit is connected to the lead unit via a brake cylinder equalizing pipe, and the units are connected to the train via a brake pipe. In lead mode, which is an operational mode of the brake control system of the lead unit, the lead unit provides operational power and implements the brake control for the entire train. In this mode, the brake control system can control the pressure of the brake cylinder, the brake cylinder equalizing pipe and the brake pipe, thereby managing the brake and release of the lead unit, the trail unit and the train, respectively.

Trail mode refers to an operational mode of the brake control system of the trail unit when two or more units are coupled. In this mode, the brake control system of the trail unit is controlled by the lead unit, and the brake cylinder of the trail unit responds to the brake and release control of the lead unit through the brake cylinder equalizing pipe.

In the dead mode, the unit loses power and is connected to the train in a similar manner to a freight car. In this mode, the brake control system of the unpowered unit controls its own brake and release by responding to the brake pipe pressure of the lead unit.

### Embodiment 1

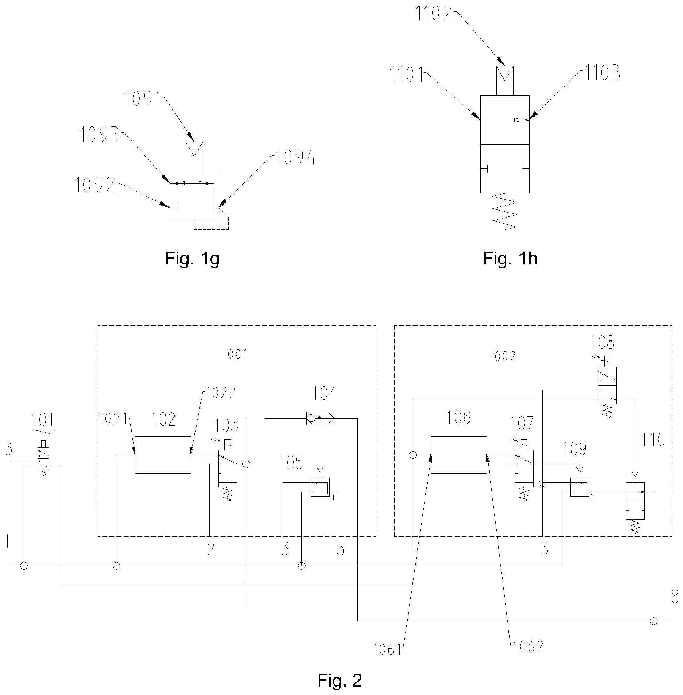

Fig. 2 is a schematic structural diagram of the locomotive brake control system provided in the present application; as shown in Fig. 2, the locomotive brake control system comprises a brake cylinder control system 001, a brake cylinder equalizing pipe control system 002 and a changeover cock 101.

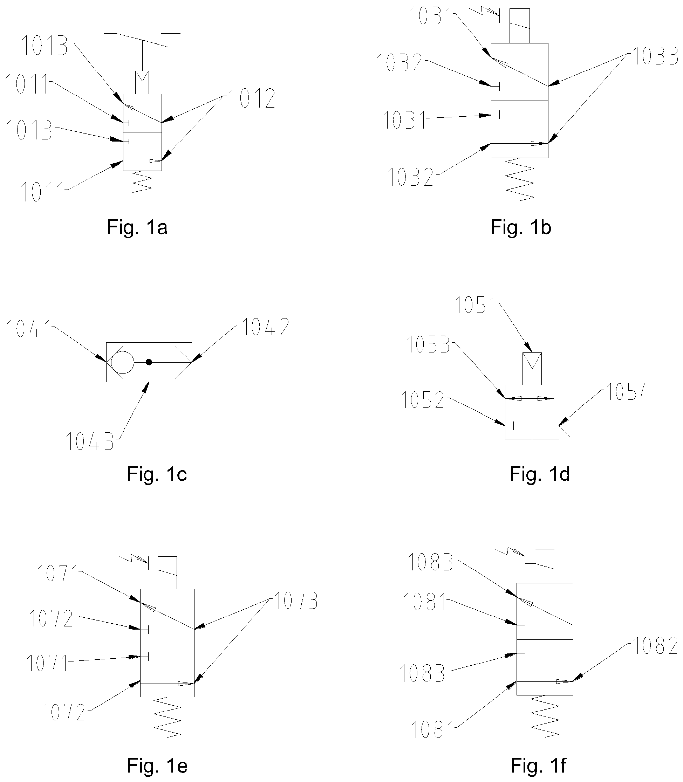

As shown in Fig. 1a, the changeover cock 101 is a two-position three-way valve, the two positions comprise a cut-in position and a cut-off position. When the locomotive brake control system is in the lead mode or the dead mode, the changeover cock 101 is set to the cut-in position, and when the locomotive brake control system is in the trail mode, the changeover cock 101 is set to the cut-off position. The three ways comprise an inlet port 1011 of the changeover cock, an outlet port 1012 of the changeover cock, and an exhaust port 1013 of the changeover cock. When the changeover cock 101 is in the cut-in position, the inlet port 1011 of the changeover cock is connected to the outlet port 1012 of the changeover cock, and when the changeover cock 101 is in the cut-off position, the outlet port 1012 of the changeover cock is connected to the exhaust port 1013 of the changeover cock. The inlet port 1011 of the changeover cock 101 is connected to the main reservoir pipe 1, the outlet port 1012 of the changeover cock is connected to the brake cylinder equalizing pipe control system 002, and the exhaust port 1013 of the changeover cock is connected to the atmosphere 3.

As shown in Fig. 1b-Fig. 1h and Fig. 2, in some embodiments, the brake cylinder control system 001 comprises a brake cylinder pressure pre-control unit 102, a first solenoid valve 103, a two-way valve 104 and a brake cylinder relay valve 105; the brake cylinder equalizing pipe control system 002 comprises a brake cylinder equalizing pipe pressure pre-control unit 106, a second solenoid valve 107, a third solenoid valve 108, a brake cylinder equalizing pipe relay valve 109 and a pneumatic control valve 110.

An inlet port 1021 of the brake cylinder pressure pre-control unit is connected to the main reservoir pipe 1, and an outlet port 1022 of the brake cylinder pressure pre-control unit is connected to a first inlet port 1031 of the first solenoid valve; a second inlet port 1032 of the first solenoid valve is connected to mechanical distribution valve pressure 2, and an outlet port 1033 of the first solenoid valve is connected to a first inlet port 1041 of the two-way valve and a second inlet port 1072 of the second solenoid valve; wherein, electronic distribution valve pressure output by the brake cylinder pressure pre-control unit 102 according to the change in the brake pipe pressure is the same as the mechanical distribution valve pressure 2. An outlet port 1043 of the two-way valve is connected to a pre-control port 1051 of the brake cylinder relay valve, an inlet port 1052 of the brake cylinder relay valve is connected to the main reservoir pipe 1, an outlet port 1053 of the brake cylinder relay valve is connected to a brake cylinder pipe, and an exhaust port 1054 of the brake cylinder relay valve is connected to the atmosphere 3. The mechanical distribution valve is connected to the brake pipe, and the mechanical distribution valve pressure, which is the pressure output by the mechanical distribution valve, is controlled by the brake pipe. When the brake pipe pressure decreases, the mechanical distribution valve pressure is increased; when the brake pipe pressure increases, the mechanical distribution valve pressure is decreased. The change in the brake pipe pressure is controlled by a brake pipe control device of the brake control system of the lead unit. The brake cylinder pressure is connected to the brake cylinder through the brake cylinder pipe. The logic program in the brake cylinder pressure pre-control unit controls the pressure output by the brake cylinder pressure pre-control unit to simulate the response relationship between the mechanical distribution valve pressure and the change in the brake pipe pressure. The brake cylinder pressure pre-control unit functions as an electronic distribution valve, and the pressure output by the brake cylinder pressure pre-control unit is the electronic distribution valve pressure. The logic program in the brake cylinder equalizing pipe pressure pre-control unit controls brake cylinder equalizing pipe pre-control pressure output by the brake cylinder equalizing pipe pressure pre-control unit to respond to the change in the brake pipe pressure. When the brake pipe pressure decreases, the brake cylinder equalizing pipe pre-control pressure is increased; when the brake pipe pressure increases, the brake cylinder equalizing pipe pre-control pressure is decreased.

An inlet port 1061 of the brake cylinder equalizing pipe pressure pre-control unit is connected to the outlet port 1012 of the changeover cock, an outlet port 1062 of the brake cylinder equalizing pipe pressure pre-control unit is connected to a first inlet port 1071 of the second solenoid valve, the second inlet port 1072 of the second solenoid valve is connected to the outlet port 1033 of the first solenoid valve, an outlet port 1073 of the second solenoid valve is connected to a pre-control port 1091 of the brake cylinder equalizing pipe relay valve, an inlet port 1092 of the brake cylinder equalizing pipe relay valve is connected to the main reservoir pipe 1, an exhaust port 1093 of the brake cylinder equalizing pipe relay valve is connected to the atmosphere 3, and an outlet port 1094 of the brake cylinder equalizing pipe relay valve is connected to an inlet port 1101 of the pneumatic control valve.

An inlet port 1081 of the third solenoid valve is connected to the outlet port 1012 of the changeover cock, an outlet port 1082 of the third solenoid valve is connected to a pre-control port 1102 of the pneumatic control valve, and an exhaust port 1083 of the third solenoid valve is connected to the atmosphere 3; the inlet port 1101 of the pneumatic control valve is connected to the outlet port 1094 of the brake cylinder equalizing pipe relay valve, an outlet port 1103 of the pneumatic control valve is connected to the brake cylinder equalizing pipe 8, and the brake cylinder equalizing pipe 8 is also connected to a second inlet port 1042 of the two-way valve.

As shown in Fig. 2 , when the changeover cock 101 is in the cut-in position, if the locomotive brake control system is normal, the brake cylinder control system 001 outputs the brake cylinder pressure 5 according to the electronic distribution valve pressure output by the brake cylinder pressure pre-control unit 102, and the brake cylinder equalizing pipe control system 002 outputs the brake cylinder equalizing pipe pressure according to the brake cylinder equalizing pipe pre-control pressure output by the brake cylinder equalizing pipe pressure pre-control unit 106; if the locomotive brake control system is powered off or fails, the brake cylinder equalizing pipe control system 002 outputs the brake cylinder equalizing pipe pressure according to the mechanical distribution valve pressure 2, and the brake cylinder control system 001 outputs the brake cylinder pressure 5 according to the mechanical distribution valve pressure 2 and the brake cylinder equalizing pipe pressure. When the locomotive brake control system is in the lead mode, the coordination between the brake cylinder equalizing pipe pressure and the brake cylinder pressure is realized, so as to achieve the consistency between the brake cylinder pressure of the trail unit and the brake cylinder pressure of the lead unit.

In some embodiments, as shown in Fig. 2, when the changeover cock 101 is in the cut-in position, the locomotive brake control system is powered normally, and the brake cylinder control system 001 and the brake cylinder equalizing pipe control system 002 have no faults, the first solenoid valve 103 and the second solenoid valve 107 are energized, while the third solenoid valve 108 is de-energized. When the first solenoid valve 103 is energized, the first inlet port 1031 of the first solenoid valve and the outlet port 1033 of the first solenoid valve are connected; when the second solenoid valve 107 is energized, the first inlet port 1071 of the second solenoid valve and the outlet port 1073 of the second solenoid valve are connected; when the third solenoid valve 108 is de-energized, the inlet port 1081 of the third solenoid valve and the outlet port 1082 of the third solenoid valve are connected. The main reservoir pipe 1 provides main air pressure to the brake cylinder pressure pre-control unit 102, and the brake cylinder pressure pre-control unit 102 outputs the electronic distribution valve pressure according to the change in the brake pipe pressure. The electronic distribution valve pressure is input to the brake cylinder relay valve 105 after passing through the first solenoid valve 103 and the two-way valve 104. The brake cylinder relay valve 105 amplifies the flow of the electronic distribution valve pressure and outputs the brake cylinder pressure 5. At the same time, the main air pressure from the main reservoir pipe 1 enters the pre-control port 1102 of the pneumatic control valve through the changeover cock 101 and the third solenoid valve 108, controlling the pneumatic control valve 110 to open. The brake cylinder equalizing pipe pressure pre-control unit 106 receives the main air pressure of the main reservoir pipe 1 through the changeover cock 101, and outputs the brake cylinder equalizing pipe pre-control pressure. The brake cylinder equalizing pipe pre-control pressure is input to the brake cylinder equalizing pipe relay valve 109 after passing through the second solenoid valve 107. The brake cylinder equalizing pipe pre-control pressure is amplified in flow by the brake cylinder equalizing pipe relay valve 109 and is input to the pneumatic control valve 110 to output the brake cylinder equalizing pipe pressure.

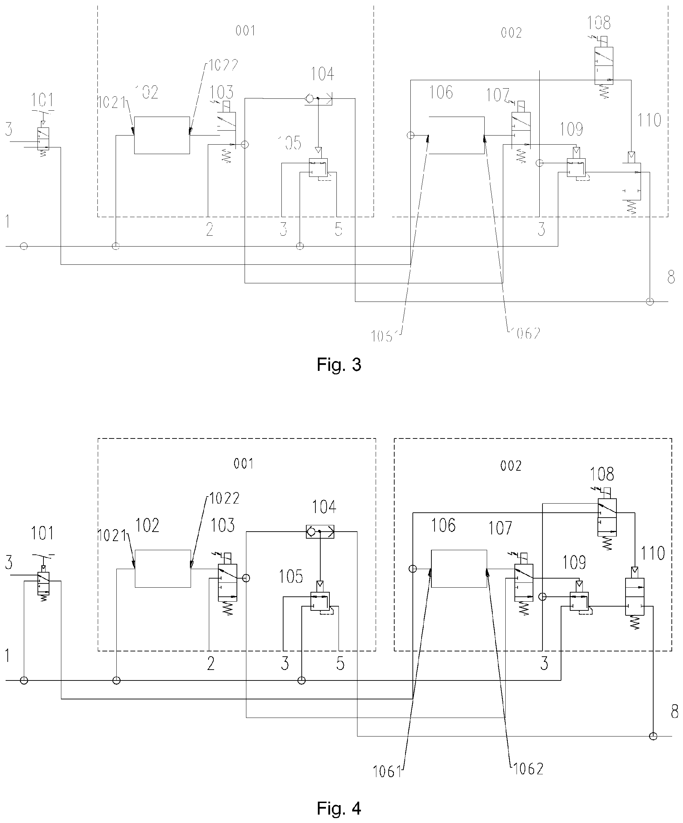

In some embodiments, as shown in Fig. 3, when the changeover cock 101 is in the cut-in position, the locomotive brake control system is powered off or the brake cylinder control and the brake cylinder equalizing pipe control fail simultaneously (mainly due to abnormal power loss or network communication failure) or the locomotive brake control system is in the pneumatic position (also known as the backup brake mode) or the locomotive brake control system is in the dead mode, the first solenoid valve 103, the second solenoid valve 107, and the third solenoid valve 108 are all de-energized. In this case, the mechanical distribution valve pressure 2 changes in response to the change in the brake pipe pressure. The mechanical distribution valve pressure 2 is input to the first inlet port 1041 of the two-way valve through the first solenoid valve 103. At the same time, the main air pressure from the main reservoir pipe 1 enters the pre-control port 1102 of the pneumatic control valve through the changeover cock 101 and the third solenoid valve 108, controlling the pneumatic control valve 110 to open. The mechanical distribution valve pressure 2 is also input to the brake cylinder equalizing pipe relay valve 109 through the first solenoid valve 103 and the second solenoid valve 107. The mechanical distribution valve pressure 2 is amplified in flow by the brake cylinder equalizing pipe relay valve 109 and is input to the pneumatic control valve 10 to output the brake cylinder equalizing pipe pressure. The brake cylinder equalizing pipe pressure enters the trail unit on the one hand, and is input to the second inlet port 1042 of the two-way valve through the brake cylinder equalizing pipe 8 on the other hand. The two-way valve 104 outputs pressure through the outlet port of two-way valve according to the mechanical distribution valve pressure 2 input through the first inlet port 1041 of the two-way valve and the brake cylinder equalizing pipe pressure input through the second inlet port 1042 of the two-way valve. The brake cylinder relay valve 105 amplifies the flow of the pressure output from the outlet port 1043 of the two-way valve and then outputs the brake cylinder pressure 5. The pressure output from the outlet port of the is equal to the higher of the mechanical distribution valve pressure and the brake cylinder equalizing pipe pressure. Since the difference between the mechanical distribution valve pressure and the brake cylinder equalizing pipe pressure is small and within the allowable error range, it is generally considered that the mechanical distribution valve pressure is equal to the brake cylinder equalizing pipe pressure. If the locomotive brake control system is in the lead mode, the coordination between the brake cylinder equalizing pipe pressure and the brake cylinder pressure of the lead unit is achieved. If the locomotive brake control system is in the dead mode, the unpowered unit can respond to the brake pipe pressure of the lead unit to control its own brake and release without discharging the brake cylinder equalizing pipe pressure.

As shown in Fig. 4, when the changeover cock 101 is in the cut-off position, the locomotive brake control system is in the trail mode. If the locomotive brake control system is normal, the brake cylinder control system 001 outputs the brake cylinder pressure 5 according to the brake cylinder equalizing pipe pressure from the lead unit; if the locomotive brake control system is powered off or fails, the brake cylinder control system 001 outputs the brake cylinder pressure 5 according to the mechanical distribution valve pressure 2 and the brake cylinder equalizing pipe pressure from the lead unit. When the locomotive brake control system is in the trail mode, the locomotive brake control system controls the brake cylinder pressure of the trail unit to be coordinated with the brake cylinder equalizing pipe pressure.

In some embodiments, as shown in Fig. 4, when the changeover cock 101 is in the cut-off position, the locomotive brake control system is in the trail mode, the locomotive brake control system is powered normally, and the brake cylinder control system 001 and the brake cylinder equalizing pipe control system 002 have no faults, in this case, the first solenoid valve 103, the second solenoid valve 107, and the third solenoid valve 108 are energized; the brake cylinder pressure pre-control unit 102 controls the the electronic distribution valve pressure to decrease to 0 kPa, and the electronic distribution valve pressure enters the first inlet port 1041 of the two-way valve through the first solenoid valve 103; the brake cylinder equalizing pipe pressure pre-control unit 106 controls the brake cylinder equalizing pipe pre-control pressure to decrease to 0 kPa, and pressure at the pre-control port 1102 of the pneumatic control valve is discharged to the atmosphere 3 through the third solenoid valve 108 and the changeover cock 101, so the pneumatic control valve 110 is in a closed state; the brake cylinder equalizing pipe pressure from the lead unit enters the second inlet port 1042 of the two-way valve through the brake cylinder equalizing pipe 8. Since the pressure at the first inlet port 1041 of the two-way valve is 0 kPa, the pressure at the second inlet port 1042 of the two-way valve enters the pre-control port 1051 of the brake cylinder relay valve, and after flow amplification of the brake cylinder relay valve 105, the brake cylinder pressure 5 is output to the brake cylinder of the trail unit through the outlet port 1053 of the brake cylinder relay valve. Therefore, the brake cylinder pressure of the trail unit can be coordinated with the brake cylinder equalizing pipe pressure from the lead unit.

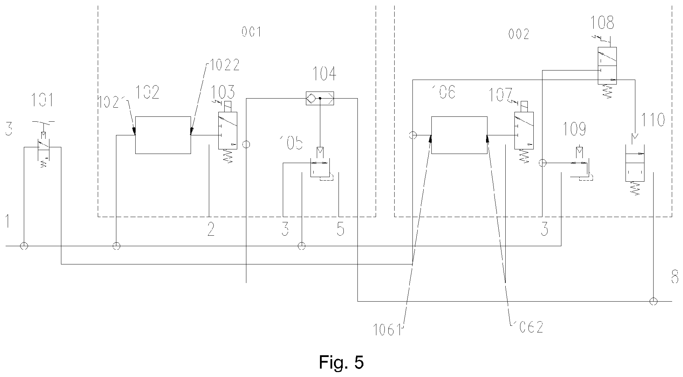

In some embodiments, as shown in Fig. 5, when the changeover cock 101 is in the cut-off position, the locomotive brake control system is in the trail mode, and the locomotive brake control system is powered off or the brake cylinder control system 001 and the brake cylinder equalizing pipe control system 002 fail simultaneously, in this case, the first solenoid valve 103, the second solenoid valve 107, and the third solenoid valve 108 are de-energized, and the mechanical distribution valve pressure 2 changes in response to the change in the brake pipe pressure. The mechanical distribution valve pressure 2 enters the first inlet port 1041 of the two-way valve through the first solenoid valve 103 on the one hand, and enters the pre-control port 1091 of the brake cylinder equalizing pipe relay valve through the second solenoid valve 107 on the other hand. Since the pressure at the pre-control port 1102 of the pneumatic control valve is discharged to the atmosphere 3 through the third solenoid valve 108 and the changeover cock 101, the pneumatic control valve 110 is in a closed state, which can cut off the passage between the brake cylinder equalizing pipe relay valve 109 and the brake cylinder equalizing pipe 8. The brake cylinder equalizing pipe pressure from the lead unit enters the second inlet port 1042 of the two-way valve through the brake cylinder equalizing pipe 8, and the two-way valve 104 outputs pressure through the outlet port of the two-way valve, which is equal to the higher of the mechanical distribution valve pressure and the brake cylinder equalizing pipe pressure. Since the difference between the mechanical distribution valve pressure and the brake cylinder equalizing pipe pressure is small and within the allowable error range, it is generally believed that the mechanical distribution valve pressure is equal to the brake cylinder equalizing pipe pressure. Since the mechanical distribution valve pressure 2 is consistent with the brake cylinder equalizing pipe pressure of the lead unit, the pressure output from the outlet port 1043 of the two-way valve enters the pre-control port 1051 of the brake cylinder relay valve, and the brake cylinder pressure of the trail unit is output after flow amplification, so that the brake cylinder pressure of the trail unit can be coordinated with the brake cylinder equalizing pipe pressure from the lead unit.

In combination with the locomotive brake control system disclosed in the first embodiment, the present embodiment discloses a specific implementation example of a locomotive brake control method (hereinafter referred to as "method") applied to the above locomotive brake control system.

The locomotive brake control method comprises:
when the locomotive brake control system is in the lead mode, the changeover cock 101 is set to the cut-in position, if the locomotive brake control system is normal, the brake cylinder control system 001 in the locomotive brake control system outputs the brake cylinder pressure 5 according to the electronic distribution valve pressure, and the brake cylinder equalizing pipe control system 002 outputs the brake cylinder equalizing pipe pressure according to the brake cylinder equalizing pipe pre-control pressure; if the locomotive brake control system is powered off or fails, the brake cylinder equalizing pipe control system 002 outputs the brake cylinder equalizing pipe pressure according to the mechanical distribution valve pressure 2, and the brake cylinder control system 001 outputs the brake cylinder pressure 5 according to the mechanical distribution valve pressure 2 and the brake cylinder equalizing pipe pressure;
when the locomotive brake control system is in the dead mode, the changeover cock 101 is set to the cut-in position, the brake cylinder equalizing pipe control system 002 outputs the brake cylinder equalizing pipe pressure according to the mechanical distribution valve pressure 2, and the brake cylinder control system 001 outputs the brake cylinder pressure 5 according to the mechanical distribution valve pressure 2 and the brake cylinder equalizing pipe pressure;
when the locomotive brake control system is in the trail mode, the changeover cock 101 is set to the cut-off position, if the locomotive brake control system is normal, the brake cylinder control system 001 controls the electronic distribution valve pressure to decrease to 0 kPa, and outputs the brake cylinder pressure 5 according to the brake cylinder equalizing pipe pressure from the lead unit; if the locomotive brake control system is powered off or fails, the brake cylinder control system 001 outputs the brake cylinder pressure 5 according to the mechanical distribution valve pressure 2 and the brake cylinder equalizing pipe pressure from the lead unit.

Specifically, when the locomotive brake control system is in the lead mode and the system is normal, that is, the power supply is normal, and the brake cylinder control and the brake cylinder equalizing pipe control have no faults, the system energizes the first solenoid valve 103 and the second solenoid valve 107, and de-energizes the third solenoid valve 108. The changeover cock 101 needs to be manually set to the cut-in position in the lead mode. The brake cylinder pressure pre-control unit 102 outputs the electronic distribution valve pressure according to the change in the brake pipe pressure, and the brake cylinder pressure 5 is output after flow amplification of the brake cylinder relay valve 105. At the same time, the main air pressure from the main reservoir pipe 1 enters the pre-control port of the pneumatic control valve 110 through the changeover cock 101, controls the pneumatic control valve 110 to open, and the brake cylinder equalizing pipe pre-control pressure output by the brake cylinder equalizing pipe pressure pre-control unit 106 is amplified in flow by the brake cylinder equalizing pipe relay valve 109 and is input to the pneumatic control valve 110 to output the brake cylinder equalizing pipe pressure.

When the locomotive brake control system is in the lead mode and the locomotive brake control system is powered off or the locomotive brake control system is in the pneumatic position or the brake cylinder control and the brake cylinder equalizing pipe control of the locomotive brake control system fail at the same time (mainly due to abnormal power loss or network communication failure), or the locomotive brake control system is in the dead mode, the changeover cock 101 is set to the cut-in position, the first solenoid valve 103, the second solenoid valve 107 and the third solenoid valve 108 are all de-energized, and the mechanical distribution valve pressure 2 changes in response to the change in the brake pipe pressure and enters the first inlet port 1041 of the two-way valve. At the same time, the main air pressure from the main reservoir pipe 1 enters the pre-control port 1102 of the pneumatic control valve through the changeover cock 101, controls the pneumatic control valve 110 to open. The mechanical distribution valve pressure 2 is amplified in flow by the brake cylinder equalizing pipe relay valve 109 and is input to the pneumatic control valve 110 to output the brake cylinder equalizing pipe pressure. The brake cylinder equalizing pipe pressure enters the trail unit on the one hand, and enters the second inlet port 1042 of the two-way valve on the other hand. The pressure at the first inlet port 1041 of the two-way valve and the pressure at the second inlet port 1042 of the two-way valve are equal. The pressure output from the outlet port 1043 of the two-way valve is amplified in flow by the brake cylinder relay valve 105 to output the brake cylinder pressure 5, achieving the coordination between the brake cylinder equalizing pipe pressure and the brake cylinder pressure. Under the premise of not changing the existing design of the locomotive and not increasing the complexity of the brake control system, for example, additional valves and related control devices for supplying air from the brake cylinder to the brake cylinder equalizing pipe are not needed, the coordination between the brake cylinder equalizing pipe pressure and the brake cylinder pressure of the lead unit is achieved. In the non-powered return mode, there is no need to exhaust the brake cylinder equalizing pipe pressure.

When the locomotive brake control system is in the trail mode and the system is normal (power supply is normal, and the brake cylinder control and the brake cylinder equalizing pipe control have no faults), the changeover cock 101 is set to the cut-off position, the first solenoid valve 103, the second solenoid valve 107, and the third solenoid valve 108 are all energized, and the brake cylinder pressure pre-control unit 102 controls the electronic distribution valve pressure to decrease to 0 kPa, and the electronic distribution valve pressure enters the first inlet port 1041 of the two-way valve. The brake cylinder equalizing pipe pressure pre-control unit 106 controls the brake cylinder equalizing pipe pre-control pressure to decrease to OkPa, and pressure at the pre-control port 1102 of the pneumatic control valve is discharged to the atmosphere 3 through the changeover cock 101, so the pneumatic control valve 110 is in a closed state, and the brake cylinder equalizing pipe pressure from the lead unit enters the second inlet port 1042 of the two-way valve. Since the pressure at the first inlet port 1041 of the two-way valve is OkPa, the pressure at the second inlet port 1042 of the two-way valve enters the pre-control port 1051 of the brake cylinder relay valve, and after flow amplification of the brake cylinder relay valve 105, the brake cylinder pressure is output to the brake cylinder of the trail unit, so that the brake cylinder pressure of the trail unit can be coordinated with the brake cylinder equalizing pipe pressure from the lead unit.

When the locomotive brake control system is in the trail mode and the brake control system is powered off or the brake cylinder control and the brake cylinder equalizing pipe control fail simultaneously, the changeover cock 101 is set to the cut-off position, the first solenoid valve 103, the second solenoid valve 107, and the third solenoid valve 108 are all de-energized, and the mechanical distribution valve pressure 2 changes in response to the change in the brake pipe pressure. The mechanical distribution valve pressure 2 enters the first inlet port 1041 of the two-way valve on the one hand, and enters the pre-control port 1091 of the brake cylinder equalizing pipe relay valve on the other hand. Since the pressure at the pre-control port 1102 of the pneumatic control valve is discharged to the atmosphere 3 through the changeover cock 101, the pneumatic control valve 110 is in a closed state, which can cut off the passage between the brake cylinder equalizing pipe relay valve 109 and the brake cylinder equalizing pipe. The brake cylinder equalizing pipe pressure from the lead unit enters the second inlet port 1042 of the two-way valve. Since the mechanical distribution valve pressure 2 is consistent with the brake cylinder equalizing pipe pressure of the lead unit, the pressure output from the outlet port 1043 of the two-way valve enters the pre-control port 1051 of the brake cylinder relay valve, and outputs the brake cylinder pressure of the trail unit after flow amplification. Therefore, the brake cylinder pressure of the trail unit can be coordinated with the brake cylinder equalizing pipe pressure from the lead unit.

To summarize, in the lead mode, when the brake control system is powered off, the brake control system is in the pneumatic position, or the brake cylinder control and the brake cylinder equalizing pipe control fail simultaneously, the coordination between the brake cylinder equalizing pipe pressure and the brake cylinder pressure of the lead unit is achieved; in the trail mode, when the brake control system is powered off or the brake cylinder control and the brake cylinder equalizing pipe control fail simultaneously, the coordination between the brake cylinder pressure of the trail unit and the brake cylinder equalizing pipe pressure is achieved; in the dead mode, there is no need to discharge the brake cylinder equalizing pipe pressure. Under the above-mentioned special conditions, the present application improves the consistency of brake and release between the lead unit and the trail unit, enhances the stability of train operation, reduces operation steps required for the dead mode, and is conducive to use and maintenance.

The technical features of the above-described embodiments may be arbitrarily combined. To make the description concise, not all possible combinations of the technical features in the above-described embodiments are described.

## Claims

1. A locomotive brake control system, wherein, in a lead mode, the locomotive brake control system controls pressure of a brake cylinder, a brake cylinder equalizing pipe (8) and a brake pipe, thereby managing brake and release of a lead unit, a trail unit and a train, respectively; in a trail mode, the locomotive brake control system of the trail unit is controlled by the lead unit, and the brake cylinder of the trail unit responds to brake and release control of the lead unit through the brake cylinder equalizing pipe (8); in a dead mode, a unit loses power and the locomotive brake control system of an unpowered unit controls its own brake and release by responding to brake pipe pressure of the lead unit;
the locomotive brake control system, **characterized in that**, it comprises: a brake cylinder control system (001), a brake cylinder equalizing pipe control system (002) and a changeover cock (101); the changeover cock (101) is a two-position three-way valve, the two positions comprise a cut-in position and a cut-off position; when the locomotive brake control system is in the lead mode or the dead mode, the changeover cock (101) is set to the cut-in position, and when the locomotive brake control system is in the trail mode, the changeover cock (101) is set to the cut-off position;
when the changeover cock (101) is in the cut-in position and the locomotive brake control system is in the lead mode, if the locomotive brake control system is normal, the brake cylinder control system (001) outputs brake cylinder pressure (5) according to electronic distribution valve pressure, and the brake cylinder equalizing pipe control system (002) outputs brake cylinder equalizing pipe pressure according to brake cylinder equalizing pipe pre-control pressure; if the locomotive brake control system is powered off or fails, the brake cylinder equalizing pipe control system (002) outputs the brake cylinder equalizing pipe pressure according to mechanical distribution valve pressure (2), and the brake cylinder control system (001) outputs the brake cylinder pressure (5) according to the mechanical distribution valve pressure (2) and the brake cylinder equalizing pipe pressure;
when the changeover cock (101) is in the cut-in position, if the locomotive brake control system is in the dead mode, the brake cylinder equalizing pipe control system (002) outputs the brake cylinder equalizing pipe pressure according to the mechanical distribution valve pressure (2), and the brake cylinder control system (001) outputs the brake cylinder pressure (5) according to the mechanical distribution valve pressure (2) and the brake cylinder equalizing pipe pressure;
when the changeover cock (101) is in the cut-off position, if the locomotive brake control system is normal, the brake cylinder control system (001) outputs the brake cylinder pressure (5) according to the electronic distribution valve pressure and the brake cylinder equalizing pipe pressure from the lead unit; if the locomotive brake control system is powered off or fails, the brake cylinder control system (001) outputs the brake cylinder pressure (5) according to the mechanical distribution valve pressure (2) and the brake cylinder equalizing pipe pressure from the lead unit.

2. The locomotive brake control system according to claim 1, **characterized in that**, when the changeover cock (101) is in the cut-in position, an inlet port of the changeover cock (1011) is connected to an outlet port of the changeover cock (1012), and when the changeover cock (101) is in the cut-off position, the outlet port of the changeover cock (1012) is connected to an exhaust port of the changeover cock (1013); the inlet port of the changeover cock (1011) is connected to a main reservoir pipe (1), the outlet port of the changeover cock (1012) is connected to the brake cylinder equalizing pipe control system (002), and the exhaust port of the changeover cock (1013) is connected to atmosphere (3).

3. The locomotive brake control system according to claim 2, **characterized in that**, the brake cylinder control system (001) comprises a brake cylinder pressure pre-control unit (102), a first solenoid valve (103), a two-way valve (104) and a brake cylinder relay valve (105); an inlet port (1021) of the brake cylinder pressure pre-control unit (102) is connected to the main reservoir pipe (1), and an outlet port (1022) of the brake cylinder pressure pre-control unit (102) is connected to a first inlet port (1031) of the first solenoid valve (103); a second inlet port (1032) of the first solenoid valve (103) is connected to the mechanical distribution valve pressure (2), and an outlet port (1033) of the first solenoid valve (103) is connected to a first inlet port (1041) of the two-way valve (104); an outlet port (1043) of the two-way valve (104) is connected to a pre-control port (1051) of the brake cylinder relay valve (105), an inlet port (1052) of the brake cylinder relay valve (105) is connected to the main reservoir pipe (1), an outlet port (1053) of the brake cylinder relay valve (105) is connected to a brake cylinder pipe, and an exhaust port (1054) of the brake cylinder relay valve (105) is connected to the atmosphere (3).

4. The locomotive brake control system according to claim 3, **characterized in that**, the brake cylinder equalizing pipe control system (002) comprises a brake cylinder equalizing pipe pressure pre-control unit, a second solenoid valve (107) and a brake cylinder equalizing pipe relay valve (109); an inlet port (1061) of the brake cylinder equalizing pipe pressure pre-control unit (106) is connected to the outlet port of the changeover cock (1012), an outlet port (1062) of the brake cylinder equalizing pipe pressure pre-control unit (106) is connected to a first inlet port (1071) of the second solenoid valve (107), a second inlet port (1072) of the second solenoid valve (107) is connected to the outlet port (1033) of the first solenoid valve (103), an outlet port (1073) of the second solenoid valve (107) is connected to a pre-control port (1091) of the brake cylinder equalizing pipe relay valve (109), an inlet port (1092) of the brake cylinder equalizing pipe relay valve (109) is connected to the main reservoir pipe (1), an exhaust port (1093) of the brake cylinder equalizing pipe relay valve (109) is connected to the atmosphere (3).

5. The locomotive brake control system according to claim 4, **characterized in that**, the brake cylinder equalizing pipe control system (002) also comprises a third solenoid valve (108) and a pneumatic control valve (110); an inlet port (1081) of the third solenoid valve (108) is connected to the outlet port of the changeover cock (1012), an outlet port (1082) of the third solenoid valve (108) is connected to a pre-control port (1102) of the pneumatic control valve (110); an inlet port (1101) of the pneumatic control valve (110) is connected to an outlet port (1094) of the brake cylinder equalizing pipe relay valve (109), an outlet port (1103) of the pneumatic control valve (110) is connected to a brake cylinder equalizing pipe (8), and the brake cylinder equalizing pipe (8) is connected to a second inlet port (1042) of the two-way valve (104).

6. The locomotive brake control system according to claim 5, **characterized in that**, when the first solenoid valve (103) and the second solenoid valve (107) are energized, the third solenoid valve (108) is de-energized, and the changeover cock (101) is set to the cut-in position, the main reservoir pipe (1) provides main air pressure to the brake cylinder pressure pre-control unit (102), and the brake cylinder pressure pre-control unit (102) outputs the electronic distribution valve pressure according to change in brake pipe pressure; the electronic distribution valve pressure is input to the brake cylinder relay valve (105) after passing through the first solenoid valve (103) and the two-way valve (104), the brake cylinder relay valve (105) amplifies flow of the electronic distribution valve pressure and outputs the brake cylinder pressure (5); at the same time, the main air pressure from the main reservoir pipe (1) enters the pre-control port (1102) of the pneumatic control valve (110) through the changeover cock (101) and the third solenoid valve (108), and controls the pneumatic control valve (110) to open; the brake cylinder equalizing pipe pressure pre-control unit (106) receives the main air pressure from the main reservoir pipe (1) through the changeover cock (101), and outputs the brake cylinder equalizing pipe pre-control pressure, the brake cylinder equalizing pipe pre-control pressure is input to the brake cylinder equalizing pipe relay valve (109) after passing through the second solenoid valve (107), the brake cylinder equalizing pipe pre-control pressure is amplified in flow by the brake cylinder equalizing pipe relay valve (109) and is input to the pneumatic control valve (110) to output the brake cylinder equalizing pipe pressure.

7. The locomotive brake control system according to claim 5, **characterized in that**, when the first solenoid valve (103), the second solenoid valve (107) and the third solenoid valve (108) are all de-energized and the changeover cock (101) is set to the cut-in position, the mechanical distribution valve pressure (2) is input to the first inlet port (1041) of the two-way valve (104) through the first solenoid valve (103), and is also input to the brake cylinder equalizing pipe relay valve (109) through the first solenoid valve (103) and the second solenoid valve (107); main air pressure from the main reservoir pipe (1) enters the pre-control port (1102) of the pneumatic control valve (110) through the changeover cock (101) and the third solenoid valve (108), and controls the pneumatic control valve (110) to open; the mechanical distribution valve pressure (2) is amplified in flow by the brake cylinder equalizing pipe relay valve (109) and is input to the pneumatic control valve (110) to output the brake cylinder equalizing pipe pressure, the brake cylinder equalizing pipe pressure is input to the second inlet port (1042) of the two-way valve (104) through the brake cylinder equalizing pipe (8); the two-way valve (104) outputs pressure through the outlet port (1043) of the two-way valve (104) according to the mechanical distribution valve pressure (2) input through the first inlet port (1041) of the two-way valve (104) and the brake cylinder equalizing pipe pressure input through the second inlet port (1042) of the two-way valve (104), the brake cylinder relay valve (105) amplifies flow of the pressure output from the outlet port (1043) of the two-way valve (104) and then outputs the brake cylinder pressure (5).

8. The locomotive brake control system according to claim 5, **characterized in that**, when the first solenoid valve (103), the second solenoid valve (107) and the third solenoid valve (108) are all energized and the changeover cock (101) is set to the cut-off position, the brake cylinder equalizing pipe pressure from the lead unit is input to the pre-control port (1051) of the brake cylinder relay valve (105) through the brake cylinder equalizing pipe (8) via the second inlet port (1042) of the two-way valve (104), and the brake cylinder relay valve (105) amplifies flow of the brake cylinder equalizing pipe pressure and then outputs the brake cylinder pressure (5).

9. The locomotive brake control system according to claim 5, **characterized in that**, when the first solenoid valve (103), the second solenoid valve (107) and the third solenoid valve (108) all de-energized and the changeover cock (101) is set to the cut-off position, the mechanical distribution valve pressure (2) is input to the first inlet port (1041) of the two-way valve (104) through the first solenoid valve (103), the brake cylinder equalizing pipe pressure from the lead unit is input to the second inlet port (1042) of the two-way valve (104) through the brake cylinder equalizing pipe (8), and the two-way valve (104) outputs pressure through the outlet port (1043) of the two-way valve (104) according to the mechanical distribution valve pressure (2) input through the first inlet port (1041) of the two-way valve (104) and the brake cylinder equalizing pipe pressure input through the second inlet port (1042) of the two-way valve (104), and the brake cylinder relay valve (105) amplifies flow of the pressure output from the outlet port (1043) of the two-way valve (104) and then outputs the brake cylinder pressure (5).

10. A locomotive brake control method, which is applied to the locomotive brake control system according to any one of claims 1-9, the locomotive brake control method, **characterized in that**, it comprises:
when the locomotive brake control system is in the lead mode, setting the changeover cock (101) to the cut-in position, if the locomotive brake control system is normal, the brake cylinder control system (001) in the locomotive brake control system outputs the brake cylinder pressure (5) according to the electronic distribution valve pressure, and the brake cylinder equalizing pipe control system (002) outputs the brake cylinder equalizing pipe pressure according to the brake cylinder equalizing pipe pre-control pressure; if the locomotive brake control system is powered off or fails, the brake cylinder equalizing pipe control system (002) outputs the brake cylinder equalizing pipe pressure according to the mechanical distribution valve pressure (2), and the brake cylinder control system (001) outputs the brake cylinder pressure (5) according to the mechanical distribution valve pressure (2) and the brake cylinder equalizing pipe pressure;
when the locomotive brake control system is in the dead mode, setting the changeover cock (101) to the cut-in position, the brake cylinder equalizing pipe control system (002) outputs the brake cylinder equalizing pipe pressure according to the mechanical distribution valve pressure (2), and the brake cylinder control system (001) outputs the brake cylinder pressure (5) according to the mechanical distribution valve pressure (2) and the brake cylinder equalizing pipe pressure;
when the locomotive brake control system is in the trail mode, setting the changeover cock (101) to the cut-off position, if the locomotive brake control system is normal, the brake cylinder control system (001) controls the electronic distribution valve pressure to decrease to 0 kPa, and the brake cylinder control system (001) outputs the brake cylinder pressure (5) according to the brake cylinder equalizing pipe pressure from the lead unit; if the locomotive brake control system is powered off or fails, the brake cylinder control system (001) outputs the brake cylinder pressure (5) according to the mechanical distribution valve pressure (2) and the brake cylinder equalizing pipe pressure from the lead unit.

11. The locomotive brake control method according to claim 10, **characterized in that**: when the locomotive brake control system is in the lead mode, setting the changeover cock (101) to the cut-in position, if the locomotive brake control system is normal, a or the first solenoid valve (103) of the brake cylinder control system (001) and a or the second solenoid valve (107) of the brake cylinder equalizing pipe control system (002) are energized, and a or the third solenoid valve (108) of the brake cylinder equalizing pipe control system (002) is de-energized, a or the brake cylinder pressure pre-control unit (102) of the brake cylinder control system (001) outputs the electronic distribution valve pressure according to change in brake pipe pressure, and the electronic distribution valve pressure is amplified in flow by a or the brake cylinder relay valve (105) of the brake cylinder control system (001) to output the brake cylinder pressure (5); at the same time, main air pressure from a main reservoir pipe (1) enters a pre-control port (1102) of a or the pneumatic control valve (110) of the brake cylinder equalizing pipe control system (002) through the changeover cock (101), and controls the pneumatic control valve (110) to open, the brake cylinder equalizing pipe pre-control pressure output by a or the brake cylinder equalizing pipe pressure pre-control unit (106) of the brake cylinder equalizing pipe control system (002) is amplified in flow by a or the brake cylinder equalizing pipe relay valve (109) of the brake cylinder equalizing pipe control system (002) and is input to the pneumatic control valve (110) to output the brake cylinder equalizing pipe pressure.

12. The locomotive brake control method according to claim 11, **characterized in that**:
when the locomotive brake control system is in the lead mode, setting the changeover cock (101) to the cut-in position, if the locomotive brake control system is powered off or fails, the first solenoid valve (103), the second solenoid valve (107) and the third solenoid valve (108) are all de-energized, and the mechanical distribution valve pressure (2) changes in response to change in brake pipe pressure and enters a first inlet port (1041) of a or the two-way valve (104) of the brake cylinder control system (001); at the same time, the main air pressure from the main reservoir pipe (1) enters a pre-control port (1102) of the pneumatic control valve (110) through the changeover cock (101), and controls the pneumatic control valve (110) to open; the mechanical distribution valve pressure (2) is amplified in flow by the brake cylinder equalizing pipe relay valve (109) and is input to the pneumatic control valve (110) to output the brake cylinder equalizing pipe pressure; the brake cylinder equalizing pipe pressure enters the trail unit on the one hand, and enters a second inlet port (1042) of the two-way valve (104) on the other hand; pressure output from an outlet port (1043) of the two-way valve (104) is amplified in flow by the brake cylinder relay valve (105) to output the brake cylinder pressure (5).

13. The locomotive brake control method according to claim 10, **characterized in that**, when the locomotive brake control system is in the dead mode, setting the changeover cock (101) to the cut-in position, a or the first solenoid valve (103) of the brake cylinder control system (001), a or the second solenoid valve (107) of the brake cylinder equalizing pipe control system (002) and a or the third solenoid valve (108) of the brake cylinder equalizing pipe control system (002) are all de-energized, and the mechanical distribution valve pressure (2) changes in response to change in brake pipe pressure and enters a first inlet port (1041) of a or the two-way valve (104) of the brake cylinder control system (001); at the same time, main air pressure from the main reservoir pipe (1) enters a pre-control port (1102) of a or the pneumatic control valve (110) of the brake cylinder equalizing pipe control system (002) through the changeover cock (101), and controls the pneumatic control valve (110) to open; the mechanical distribution valve pressure (2) is amplified in flow by a or the brake cylinder equalizing pipe relay valve (109) of the brake cylinder equalizing pipe control system (002) and is input to the pneumatic control valve (110) to output the brake cylinder equalizing pipe pressure; the brake cylinder equalizing pipe pressure enters the trail unit on the one hand, and enters a second inlet port (1042) of the two-way valve (104) on the other hand; pressure output from the outlet port (1043) of the two-way valve (104) is amplified in flow by a or the brake cylinder relay valve (105) of the brake cylinder control system (001) to output the brake cylinder pressure (5).

14. The locomotive brake control method according to claim 10, **characterized in that**, when the locomotive brake control system is in the trail mode, setting the changeover cock (101) to the cut-off position, if the locomotive brake control system is normal, a or the first solenoid valve (103) of the brake cylinder control system (001), a or the second solenoid valve (107) of the brake cylinder equalizing pipe control system (002), and a or the third solenoid valve (108) of the brake cylinder equalizing pipe control system (002) are all energized, and a or the brake cylinder pressure pre-control unit (102) of the brake cylinder control system (001) controls the electronic distribution valve pressure to decrease to OkPa, and the electronic distribution valve pressure enters a first inlet port (1041) of a or the two-way valve (104) of the brake cylinder control system (001); a or the brake cylinder equalizing pipe pressure pre-control unit (106) of the brake cylinder equalizing pipe control system (002) controls the brake cylinder equalizing pipe pre-control pressure to decrease to 0kPa; pressure at the pre-control port (1102) of a or the pneumatic control valve (110) of the brake cylinder equalizing pipe control system (002) is discharged to the atmosphere (3) through the changeover cock (101), and the pneumatic control valve (110) is in a closed state; the brake cylinder equalizing pipe pressure from the lead unit enters a second inlet port (1042) of the two-way valve (104), pressure at the second inlet port (1042) of the two-way valve (104) enters a pre-control port (1051) of a or the brake cylinder relay valve (105) of the brake cylinder control system (001), and the brake cylinder pressure (5) is output to the brake cylinder of the trail unit after flow amplification of the brake cylinder relay valve (105).

15. The locomotive brake control method according to claim 14, **characterized in that**, when the locomotive brake control system is in the trail mode, setting the changeover cock (101) to the cut-off position, if the locomotive brake control system is powered off or fails, the first solenoid valve (103), the second solenoid valve (107), and the third solenoid valve (108) are all de-energized, and the mechanical distribution valve pressure (2) changes in response to change in the brake pipe pressure; the mechanical distribution valve pressure (2) enters the first inlet port (1041) of the two-way valve (104) on the one hand, and enters a pre-control port (1091) of a or the brake cylinder equalizing pipe relay valve (109) of the brake cylinder equalizing pipe control system (002) on the other hand; pressure at the pre-control port (1102) of the pneumatic control valve (110) is discharged to the atmosphere (3) through the changeover cock (101), and the pneumatic control valve (110) is in a closed state; the brake cylinder equalizing pipe pressure from the lead unit enters the second inlet port (1042) of the two-way valve (104), pressure output from the outlet port (1043) of the two-way valve (104) enters the pre-control port (1051) of the brake cylinder relay valve (105), and the brake cylinder pressure (5) of the trail unit is output after flow amplification.

## Patentansprüche

1. Lokomotivbremssteuersystem, wobei das Lokomotivbremssteuersystem in einem Führungsmodus den Druck eines Bremszylinders, einer Bremszylinderausgleichleitung (8) und einer Bremsleitung steuert, wodurch das Bremsen und Lösen einer Führungseinheit, einer Folgeeinheit beziehungsweise eines Zuges verwaltet wird; das Lokomotivbremssteuersystem der Folgeeinheit in einem Folgemodus durch die Führungseinheit gesteuert wird, und der Bremszylinder der Folgeeinheit auf die Brems- und Lösesteuerung der Führungseinheit durch die Bremszylinderausgleichleitung (8) reagiert; eine Einheit in einem Ruhemodus ihre Leistung verliert, und das Lokomotivbremssteuersystem einer nicht angetriebenen Einheit seine eigene Bremse und sein eigenes Lösen steuert, indem es auf den Bremsleitungsdruck der Führungseinheit reagiert;
wobei das Lokomotivbremssteuersystem **dadurch gekennzeichnet ist, dass** es umfasst:
ein Bremszylindersteuersystem (001), ein Bremszylinderausgleichleitungssteuersystem (002) und einen Umschalthahn (101); der Umschalthahn (101) ein Dreiwegeventil mit zwei Positionen ist, wobei die zwei Positionen eine Einschaltposition und eine Ausschaltposition umfassen; wenn sich das Lokomotivbremssteuersystem in dem Führungsmodus oder in dem Ruhemodus befindet, der Umschalthahn (101) auf die Einschaltposition eingestellt ist, und wenn sich das Lokomotivbremssteuersystem in dem Folgemodus befindet, der Umschalthahn (101) auf die Ausschaltposition eingestellt ist;
wenn sich der Umschalthahn (101) in der Einschaltposition befindet und sich das Lokomotivbremssteuersystem in dem Führungsmodus befindet, das Bremszylindersteuersystem (001), wenn das Lokomotivbremssteuersystem normal ist, den Bremszylinderdruck (5) gemäß dem elektronischen Verteilerventildruck ausgibt, und das Bremszylinderausgleichleitungssteuersystem (002) den Bremszylinderausgleichleitungsdruck gemäß dem Bremszylinderausgleichleitungsvorsteuerdruck ausgibt; wenn das Lokomotivbremssteuersystem ausgeschaltet ist oder ausfällt, das Bremszylinderausgleichleitungssteuersystem (002) den Bremszylinderausgleichleitungsdruck gemäß dem mechanischen Verteilerventildruck (2) ausgibt, und das Bremszylindersteuersystem (001) den Bremszylinderdruck (5) gemäß dem mechanischen Verteilerventildruck (2) und dem Bremszylinderausgleichleitungsdruck ausgibt;
wenn sich der Umschalthahn (101) in der Einschaltposition befindet, wenn sich das Lokomotivbremssteuersystem in dem Ruhemodus befindet, das Bremszylinderausgleichleitungssteuersystem (002) den Bremszylinderausgleichleitungsdruck gemäß dem mechanischen Verteilerventildruck (2) ausgibt, und das Bremszylindersteuersystem (001) den Bremszylinderdruck (5) gemäß dem mechanischen Verteilerventildruck (2) und dem Bremszylinderausgleichleitungsdruck ausgibt;
wenn sich der Umschalthahn (101) in der Abschaltposition befindet, das Bremszylindersteuersystem (001), wenn das Lokomotivbremssteuersystem normal ist, den Bremszylinderdruck (5) gemäß dem elektronischen Verteilerventildruck und dem Bremszylinderausgleichleitungsdruck von der Führungseinheit ausgibt; wenn das Lokomotivbremssteuersystem ausgeschaltet ist oder ausfällt, das Bremszylindersteuersystem (001) den Bremszylinderdruck (5) gemäß dem mechanischen Verteilerventildruck (2) und dem Bremszylinderausgleichleitungsdruck von der Führungseinheit ausgibt.

2. Lokomotivbremssteuersystem nach Anspruch 1, **dadurch gekennzeichnet, dass**, wenn sich der Umschalthahn (101) in der Einschaltposition befindet, eine Einlassöffnung des Umschalthahns (1011) mit einer Auslassöffnung des Umschalthahns (1012) verbunden ist, und wenn sich der Umschalthahn (101) in der Ausschaltposition befindet, die Auslassöffnung des Umschalthahns (1012) mit einer Auslassöffnung des Umschalthahns (1013) verbunden ist; die Einlassöffnung des Umschalthahns (1011) mit einer Hauptreservoirleitung (1) verbunden ist, die Auslassöffnung des Umschalthahns (1012) mit dem Bremszylinderausgleichleitungssteuersystem (002) verbunden ist und die Auslassöffnung des Umschalthahns (1013) mit der Atmosphäre (3) verbunden ist.

3. Lokomotivbremssteuersystem nach Anspruch 2, **dadurch gekennzeichnet, dass** das Bremszylindersteuersystem (001) eine Bremszylinderdruckvorsteuereinheit (102), ein erstes Magnetventil (103), ein Zweiwegeventil (104) und ein Bremszylinderrelaisventil (105) umfasst; eine Einlassöffnung (1021) der Bremszylinderdruckvorsteuereinheit (102) mit der Hauptreservoirleitung (1) verbunden ist und eine Auslassöffnung (1022) der Bremszylinderdruckvorsteuereinheit (102) mit einer ersten Einlassöffnung (1031) des ersten Magnetventils (103) verbunden ist; eine zweite Einlassöffnung (1032) des ersten Magnetventils (103) mit dem mechanischen Verteilerventildruck (2) verbunden ist, und eine Auslassöffnung (1033) des ersten Magnetventils (103) mit einer ersten Einlassöffnung (1041) des Zweiwegeventils (104) verbunden ist; eine Auslassöffnung (1043) des Zweiwegeventils (104) mit einer Vorsteueröffnung (1051) des Bremszylinderrelaisventils (105) verbunden ist, eine Einlassöffnung (1052) des Bremszylinderrelaisventils (105) mit der Hauptreservoirleitung (1) verbunden ist, eine Auslassöffnung (1053) des Bremszylinderrelaisventils (105) mit einer Bremszylinderleitung verbunden ist und eine Auslassöffnung (1054) des Bremszylinderrelaisventils (105) mit der Atmosphäre (3) verbunden ist.

4. Lokomotivbremssteuersystem nach Anspruch 3, **dadurch gekennzeichnet, dass** das Bremszylinderausgleichleitungssteuersystem (002) eine Bremszylinderausgleichleitungsdruckvorsteuereinheit, ein zweites Magnetventil (107), und ein Bremszylinderausgleichleitungsventil (109) umfasst; eine Einlassöffnung (1061) der Bremszylinderausgleichleitungsdruckvorsteuereinheit (106) mit der Auslassöffnung des Umschalthahns (1012) verbunden ist, eine Auslassöffnung (1062) der Bremszylinderausgleichleitungsvorsteuereinheit (106) mit einer ersten Einlassöffnung (1071) des zweiten Magnetventils (107) verbunden ist, eine zweite Einlassöffnung (1072) des zweiten Magnetventils (107) mit der Auslassöffnung (1033) des ersten Magnetventils (103) verbunden ist, eine Auslassöffnung (1073) des zweiten Magnetventils (107) mit einer Vorsteueröffnung (1091) des Bremszylinderausgleichleitungsrelaisventils (109) verbunden ist, eine Einlassöffnung (1092) des Bremszylinderausgleichleitungsrelaisventils (109) mit der Hauptreservoirleitung (1) verbunden ist, eine Auslassöffnung (1093) des Bremszylinderausgleichleitungsrelaisventils (109) mit der Atmosphäre (3) verbunden ist.

5. Lokomotivbremssteuersystem nach Anspruch 4, **dadurch gekennzeichnet, dass** das Bremszylinderausgleichleitungssteuersystem (002) ebenso ein drittes Magnetventil (108) und ein pneumatisches Steuerventil (110) umfasst; eine Einlassöffnung (1081) des dritten Magnetventils (108) mit der Auslassöffnung des Umschalthahns (1012) verbunden ist, eine Auslassöffnung (1082) des dritten Magnetventils (108) mit einer Vorsteueröffnung (1102) des pneumatischen Steuerventils (110) verbunden ist; eine Einlassöffnung (1101) des pneumatischen Steuerventils (110) mit einer Auslassöffnung (1094) des Bremszylinderausgleichleitungsrelaisventils (109) verbunden ist, eine Auslassöffnung (1103) des pneumatischen Steuerventils (110) mit einer Bremszylinderausgleichleitung (8) verbunden ist und die Bremszylinderausgleichleitung (8) mit einer zweiten Einlassöffnung (1042) des Zweiwegeventils (104) verbunden ist.

6. Lokomotivbremssteuersystem nach Anspruch 5, **dadurch gekennzeichnet, dass**, wenn das erste Magnetventil (103) und das zweite Magnetventil (107) erregt sind, das dritte Magnetventil (108) nicht erregt ist und der Umschalthahn (101) in die Einschaltposition eingestellt wird, die Hauptreservoirleitung (1) der Bremszylinderdruckvorsteuereinheit (102) Hauptluftdruck bereitstellt und die Bremszylinderdruckvorsteuereinheit (102) den elektronischen Verteilerventildruck gemäß der Änderung des Bremsleitungsdrucks ausgibt; der elektronische Verteilerventildruck in das Bremszylinderrelaisventil (105) eingegeben wird, nachdem er durch das erste Magnetventil (103) und das Zweiwegeventil (104) passiert ist, das Bremszylinderrelaisventil (105) den Fluss des elektronischen Verteilerventildrucks verstärkt und den Bremszylinderdruck (5) ausgibt; der Hauptluftdruck gleichzeitig aus der Hauptreservoirleitung (1) über den Umschalthahn (101) und das dritte Magnetventil (108) in die Vorsteueröffnung (1102) des pneumatischen Steuerventils (110) eintritt und das Öffnen des pneumatischen Steuerventils (110) steuert; die Bremszylinderausgleichleitungsdruckvorsteuereinheit (106) den Hauptluftdruck von der Hauptvorratsleitung (1) über den Umschalthahn (101) empfängt und den Bremszylinderausgleichleitungsvorsteuerdruck ausgibt, wobei der Bremszylinderausgleichleitungsvorsteuerdruck in das Bremszylinderausgleichleitungsrelaisventil (109) eingegeben wird, nachdem er das zweite Magnetventil (107) passiert hat, der Bremszylinderausgleichleitungsvordruck durch das Bremszylinderausgleichleitungsrelaisventil (109) in der Strömung verstärkt wird und in das pneumatische Steuerventil (110) eingegeben wird, um den Druck der Bremszylinderausgleichleitung auszugeben.

7. Lokomotivbremssteuersystem nach Anspruch 5, **dadurch gekennzeichnet, dass**, wenn das erste Magnetventil (103), das zweite Magnetventil (107) und das dritte Magnetventil (108) alle nicht erregt sind und der Umschalthahn (101) auf die Einschaltposition eingestellt ist, der mechanische Verteilerventilsteuerdruck (2) über das erste Magnetventil (103) in die erste Einlassöffnung (1041) des Zweiwegeventils (104) eingegeben wird und ebenso über das erste Magnetventil (103) und das zweite Magnetventil (107) in das Bremszylinderausgleichleitungsrelaisventil (109) eingegeben wird; der Hauptluftdruck aus der Hauptreservoirleitung (1) über den Umschalthahn (101) und das dritte Magnetventil (108) in die Vorsteueröffnung (1102) des pneumatischen Steuerventils (110) eintritt und das Öffnen des pneumatischen Steuerventils (110) steuert; der mechanische Verteilerventildruck (2) durch das Bremszylinderausgleichleitungsrelaisventil (109) in der Strömung verstärkt wird und in das pneumatische Steuerventil (110) eingegeben wird, um den Bremszylinderausgleichleitungsdruck auszugeben, der Bremszylinderausgleichleitungsdruck in die zweite Einlassöffnung (1042) des Zweiwegeventils (104) über die Bremszylinderausgleichleitung (8) eingegeben wird; das Zweiwegeventil (104) den Druck durch die Auslassöffnung (1043) des Zweiwegeventils (104) gemäß dem mechanischen Verteilerventildruck (2), der durch die erste Einlassöffnung (1041) des Zweiwegeventils (104) eingegeben wird, und dem Bremszylinderausgleichleitungsdruck, der durch die zweite Einlassöffnung (1042) des Zweiwegeventils (104) eingegeben wird, ausgibt, das Bremszylinderrelaisventil (105) den Strom des Drucks, der von der Auslassöffnung (1043) des Zweiwegeventils (104) ausgegeben wird, verstärkt und dann den Bremszylinderdruck (5) ausgibt.

8. Lokomotivbremssteuersystem nach Anspruch 5, **dadurch gekennzeichnet, dass**, wenn das erste Magnetventil (103), das zweite Magnetventil (107) und das dritte Magnetventil (108) alle erregt sind und der Umschalthahn (101) in die Ausschaltposition eingestellt ist, der Bremszylinderausgleichleitungsdruck von der Führungseinheit in die Vorsteueröffnung (1051) des Bremszylinderrelaisventils (105) durch die Bremszylinderausgleichleitung (8) über die zweite Einlassöffnung (1042) des Zweiwegeventils (104) eingegeben wird, und das Bremszylinderrelaisventil (105) den Strom des Bremszylinderausgleichleitungsdrucks verstärkt und dann den Bremszylinderdruck (5) ausgibt.

9. Lokomotivbremssteuersystem nach Anspruch 5, **dadurch gekennzeichnet, dass**, wenn das erste Magnetventil (103), das zweite Magnetventil (107) und das dritte Magnetventil (108) alle nicht erregt sind und der Umschalthahn (101) in die Abschaltposition eingestellt ist, der Druck des mechanischen Verteilerventils (2) über das erste Magnetventil (103) in die erste Einlassöffnung (1041) des Zweiwegeventils (104) eingegeben wird, der Bremszylinderausgleichleitungsdruck von der Führungseinheit über die Bremszylinderausgleichleitung (8) in die zweite Einlassöffnung (1042) des Zweiwegeventils (104) eingegeben wird, und das Zweiwegeventil (104) den Druck durch die Auslassöffnung (1043) des Zweiwegeventils (104) gemäß dem mechanischen Verteilerventildruck (2), der durch die erste Einlassöffnung (1041) des Zweiwegeventils (104) eingegeben wird, und dem Bremszylinderausgleichleitungsdruck, der durch die zweite Einlassöffnung (1042) des Zweiwegeventils (104) eingegeben wird, ausgibt, und das Bremszylinderrelaisventil (105) den Strom des Drucks, der von der Auslassöffnung (1043) des Zweiwegeventils (104) ausgegeben wird, verstärkt und dann den Bremszylinderdruck (5) ausgibt.

10. Lokomotivbremssteuerverfahren, das auf das Lokomotivbremssteuersystem nach einem der Ansprüche 1 bis 9 angewendet wird, wobei das Lokomotivbremssteuerverfahren **dadurch gekennzeichnet ist, dass** es umfasst:
wenn das Lokomotivbremssteuersystem in dem Führungsmodus ist, Einstellen des Umschalthahns (101) in die Einschaltposition, wenn das Lokomotivbremssteuersystem normal ist, das Bremszylindersteuersystem (001) in dem Lokomotivbremssteuersystem den Bremszylinderdruck (5) gemäß dem elektronischen Verteilerventildruck ausgibt, und das Bremszylinderausgleichleitungssteuersystem (002) den Bremszylinderausgleichleitungsdruck gemäß dem Bremszylinderausgleichleitungsvorsteuerdruck ausgibt; wenn das Lokomotivbremssteuersystem ausgeschaltet ist oder ausfällt, das Bremszylinderausgleichleitungssteuersystem (002) den Bremszylinderausgleichleitungsdruck gemäß dem mechanischen Verteilerventildruck (2) ausgibt, und das Bremszylindersteuersystem (001) den Bremszylinderdruck (5) gemäß dem mechanischen Verteilerventildruck (2) und dem Bremszylinderausgleichleitungsdruck ausgibt;
wenn das Lokomotivbremssteuersystem in dem Ruhemodus ist, Einstellen des Umschalthahns (101) in die Einschaltposition, das Bremszylinderausgleichleitungssteuersystem (002) den Bremszylinderausgleichleitungsdruck gemäß dem mechanischen Verteilerventildruck (2) ausgibt und das Bremszylindersteuersystem (001) den Bremszylinderdruck (5) gemäß dem mechanischen Verteilerventildruck (2) und dem Bremszylinderausgleichleitungsdruck ausgibt;
wenn sich das Lokomotivbremssteuersystem in dem Folgemodus befindet, Einstellen des Umschalthahns (101) in die Abschaltposition, wenn das Lokomotivbremssteuersystem normal ist, das Bremszylindersteuersystem (001) den elektronischen Verteilerventildruck derart steuert, dass er auf 0 kPa abfällt, und das Bremszylindersteuersystem (001) den Bremszylinderdruck (5) gemäß dem Bremszylinderausgleichleitungsdruck von der Führungseinheit ausgibt; wenn das Lokomotivbremssteuersystem ausgeschaltet ist oder ausfällt, das Bremszylindersteuersystem (001) den Bremszylinderdruck (5) gemäß dem mechanischen Verteilerventildruck (2) und dem Bremszylinderausgleichleitungsdruck von der Führungseinheit ausgibt.

11. Lokomotivbremssteuerverfahren nach Anspruch 10, **dadurch gekennzeichnet, dass**: wenn sich das Lokomotivbremssteuersystem in dem Führungsmodus befindet, der Umschalthahn (101) in die Einschaltposition eingestellt wird, wenn das Lokomotivbremssteuersystem normal ist, ein oder das erste Magnetventil (103) des Bremszylindersteuersystems (001) und ein oder das zweite Magnetventil (107) des Bremszylinderausgleichleitungssteuersystems (002) erregt werden und ein oder das dritte Magnetventil (108) des Bremszylinderausgleichleitungssteuersystems (002) nicht erregt ist, eine oder die Bremszylinderdruckvorsteuereinheit (102) des Bremszylindersteuersystems (001) den elektronischen Verteilerventildruck gemäß der Änderung des Bremsleitungsdrucks ausgibt, und der elektronische Verteilerventildruck durch ein oder das Bremszylinderrelaisventil (105) des Bremszylindersteuersystems (001) in dem Fluss verstärkt wird, um den Bremszylinderdruck (5) auszugeben; der Hauptluftdruck gleichzeitig aus einer Hauptreservoirleitung (1) durch den Umschalthahn (101) in eine Vorsteueröffnung (1102) eines oder des pneumatischen Steuerventils (110) des Bremszylinderausgleichleitungssteuersystems (002) eintritt und das pneumatische Steuerventil (110) zum Öffnen steuert, der Bremszylinderausgleichleitungsvorsteuerdruck, der von einer oder der Bremszylinderausgleichleitungsdruckvorsteuereinheit (106) des Bremszylinderausgleichleitungssteuersystems (002) ausgegeben wird, durch ein oder das Bremszylinderausgleichleitungsrelaisventil (109) des Bremszylinderausgleichleitungssteuersystems (002) in dem Fluss verstärkt und in das pneumatischen Steuerventil (110) eingegeben wird, um den Bremszylinderausgleichleitungsdruck auszugeben.

12. Lokomotivbremssteuerverfahren nach Anspruch 11, **dadurch gekennzeichnet, dass**: wenn sich das Lokomotivbremssteuersystem in dem Führungsmodus befindet, der Umschalthahn (101) in die Einschaltposition eingestellt wird, wenn das Lokomotivbremssteuersystem ausgeschaltet ist oder ausfällt, das erste Magnetventil (103), das zweite Magnetventil (107) und das dritte Magnetventil (108) alle nicht erregt sind und der mechanische Verteilerventildruck (2) sich als Reaktion auf die Änderung des Bremsleitungsdrucks ändert und in eine erste Einlassöffnung (1041) eines oder des Zweiwegeventils (104) des Bremszylindersteuersystems (001) eintritt; der Hauptluftdruck gleichzeitig aus der Hauptreservoirleitung (1) über den Umschalthahn (101) in eine Vorsteueröffnung (1102) des pneumatischen Steuerventils (110) eintritt und das Öffnen des pneumatischen Steuerventils (110) steuert; der mechanische Verteilerventildruck (2) durch das Bremszylinderausgleichleitungsrelaisventil (109) in dem Fluss verstärkt wird und in das pneumatische Steuerventil (110) eingegeben wird, um den Bremszylinderausgleichleitungsdruck auszugeben; der Bremszylinderausgleichleitungsdruck einerseits in die Folgeeinheit eintritt und andererseits in eine zweite Einlassöffnung (1042) des Zweiwegeventils (104) eintritt; der von einer Auslassöffnung (1043) des Zweiwegeventils (104) ausgegebene Druck durch das Bremszylinderrelaisventil (105) in dem Fluss verstärkt wird, um den Bremszylinderdruck (5) auszugeben.

13. Lokomotivbremssteuerverfahren nach Anspruch 10, **dadurch gekennzeichnet, dass**: wenn sich das Lokomotivbremssteuersystem in dem Ruhemodus befindet, der Umschalthahn (101) in die Abschaltposition eingestellt wird, ein oder das erste Magnetventil (103) des Bremszylindersteuersytems (001), ein oder das zweite Magnetventil (107) des Bremszylinderausgleichleitungssteuersytems (002) und ein oder das dritte Magnetventil (108) des Bremszylinderausgleichleitungssteuersytems (002) alle nicht erregt sind und der mechanische Verteilerventildruck (2) sich als Reaktion auf die Änderung des Bremsleitungsdrucks ändert und in eine erste Einlassöffnung (1041) eines oder des Zweiwegeventils (104) des Bremszylindersteuersystems (001) eintritt; der Hauptluftdruck gleichzeitig aus der Hauptreservoirleitung (1) über den Umschalthahn (101) in eine Vorsteueröffnung (1102) eines oder des pneumatischen Steuerventils (110) des Bremszylinderausgleichleitungssteuersytems (002) eintritt und das Öffnen des pneumatischen Steuerventils (110) steuert; der mechanische Verteilerventildruck (2) durch ein oder das Bremszylinderausgleichleitungsrelaisventil (109) des Bremszylinderausgleichleitungssteuersytems (002) in dem Fluss verstärkt wird und in das pneumatische Steuerventil (110) eingegeben wird, um den Bremszylinderausgleichleitungsdruck auszugeben; der Bremszylinderausgleichleitungsdruck einerseits in die Folgeeinheit eintritt und andererseits in eine zweite Einlassöffnung (1042) des Zweiwegeventils (104) eintritt; der von einer Auslassöffnung (1043) des Zweiwegeventils (104) ausgegebene Druck durch ein oder das Bremszylinderrelaisventil (105) des Bremszylindersteuersytems (001) in dem Fluss verstärkt wird, um den Bremszylinderdruck (5) auszugeben.

14. Lokomotivbremssteuerverfahren nach Anspruch 10, **dadurch gekennzeichnet, dass**: wenn sich das Lokomotivbremssteuersystem in dem Folgemodus befindet, der Umschalthahn (101) in die Abschaltposition eingestellt wird, wenn das Lokomotivbremssteuersystem normal ist, ein oder das erste Magnetventil (103) des Bremszylindersteuersystems (001), ein oder das zweite Magnetventil (107) des Bremszylinderausgleichleitungssteuersystems (002) und ein oder das dritte Magnetventil (108) des Bremszylinderausgleichleitungssteuersystems (002) alle erregt werden, und eine oder die Bremszylinderdruckvorsteuereinheit (102) des Bremszylindersteuersystems (001) den elektronischen Verteilerventildruck derart steuert, dass er auf 0 kPa abfällt, und der elektronische Verteilerventildruck in eine ersten Einlassöffnung (1041) eines oder des Zweiwegeventils (104) des Bremszylindersteuersystems (001) eintritt; eine oder die Bremszylinderausgleichleitungsdruckvorsteuereinheit (106) des Bremszylinderausgleichleitungssteuersystems (002) den Bremszylinderausgleichleitungsvorsteuerdruck derart steuert, dass er auf 0 kPa abfällt; der Druck an der Vorsteueröffnung (1102) eines oder des pneumatischen Steuerventils (110) des Bremszylinderausgleichleitungssteuersystems (002) über den Umschalthahn (101) in die Atmosphäre (3) abgelassen wird und sich das pneumatische Steuerventil (110) in einem geschlossenen Zustand befindet; der Bremszylinderausgleichleitungsdruck von der Führungseinheit in eine zweite Einlassöffnung (1042) des Zweiwegeventils (104) eintritt, der Druck an der zweiten Einlassöffnung (1042) des Zweiwegeventils (104) in eine Vorsteueröffnung (1051) eines oder des Bremszylinderrelaisventils (105) des Bremszylindersteuersystems (001) eintritt und der Bremszylinderdruck (5) nach der Flussverstärkung des Bremszylinderrelaisventils (105) an den Bremszylinder der Folgeeinheit ausgegeben wird.

15. Lokomotivbremssteuerverfahren nach Anspruch 14, **dadurch gekennzeichnet, dass**: wenn sich das Lokomotivbremssteuersystem in dem Folgemodus befindet, der Umschalthahn (101) in die Abschaltposition eingestellt wird, wenn das Lokomotivbremssteuersystem ausgeschaltet ist oder ausfällt, das erste Magnetventil (103), das zweite Magnetventil (107) und das dritte Magnetventil (108) alle nicht erregt sind und der mechanische Verteilerventildruck (2) sich als Reaktion auf die Änderung des Bremsleitungsdrucks ändert; der mechanische Verteilerventildruck (2) einerseits in die erste Einlassöffnung (1041) des Zweiwegeventils (104) und andererseits in eine Vorsteueröffnung (1091) eines oder des Bremszylinderausgleichleitungsrelaisventils (109) des Bremszylinderausgleichleitungssteuersystems (002) eintritt; der Druck an der Vorsteueröffnung(1102) des pneumatischen Steuerventils (110) über den Umschalthahn (101) in die Atmosphäre (3) abgelassen wird, und das pneumatische Steuerventil (110) sich in einem geschlossenen Zustand befindet; der Bremszylinderausgleichleitungsdruck von der Führungseinheit in die zweite Einlassöffnung(1042) des Zweiwegeventils (104) eintritt, der von der Auslassöffnung (1043) des Zweiwegeventils (104) ausgegebene Druck in die Vorsteueröffnung(1051) des Bremszylinderrelaisventils (105) eintritt und der Bremszylinderdruck (5) der Folgeeinheit nach der Flussverstärkung ausgegeben wird.

## Revendications

1. Système de commande de frein de locomotive, dans lequel, dans un mode meneur, le système de commande de frein de locomotive commande la pression d'un cylindre de frein, d'une conduite d'équilibrage de cylindre de frein (8) et d'une conduite générale, pour ainsi gérer le freinage et le relâchement d'une unité meneuse, d'une unité menée et d'un train, respectivement ; dans un mode mené, le système de commande de frein de locomotive de l'unité menée est commandé par l'unité meneuse, et le cylindre de frein de l'unité menée répond à la commande de freinage et relâchement de l'unité meneuse par l'intermédiaire de la conduite d'équilibrage de cylindre de frein (8) ; dans un mode inactif, une unité perd de la puissance et le système de commande de frein de locomotive d'une unité non alimentée commande ses propres freinage et relâchement par réaction à la pression de conduite générale de l'unité meneuse ;
le système de commande de frein de locomotive étant **caractérisé en ce qu'**il comprend : un système de commande de cylindre de frein (001), un système de commande de conduite d'équilibrage de cylindre de frein (002) et un répartiteur (101) ; le répartiteur (101) est une soupape à trois voies et deux positions, les deux positions comprennent une position de réalimentation et une position de coupure ; lorsque le système de commande de frein de locomotive est dans le mode meneur ou le mode inactif, le répartiteur (101) est réglé à la position de réalimentation, et lorsque le système de commande de frein de locomotive est dans le mode mené, le répartiteur (101) est réglé à la position de coupure ;
lorsque le répartiteur (101) est dans la position de réalimentation et le système de commande de frein de locomotive est dans le mode meneur, si le système de commande de frein de locomotive est normal, le système de commande de cylindre de frein (001) délivre une pression de cylindre de frein (5) selon une pression de soupape de distribution électronique, et le système de commande de conduite d'équilibrage de cylindre de frein (002) délivre une pression de conduite d'équilibrage de cylindre de frein selon une pression de précommande de conduite d'équilibrage de cylindre de frein ; si le système de commande de frein de locomotive n'est plus alimenté ou est défaillant, le système de commande de conduite d'équilibrage de cylindre de frein (002) délivre la pression de conduite d'équilibrage de cylindre de frein selon une pression de soupape de distribution mécanique (2), et le système de commande de cylindre de frein (001) délivre la pression de cylindre de frein (5) selon la pression de soupape de distribution mécanique (2) et la pression de conduite d'équilibrage de cylindre de frein ;
lorsque le répartiteur (101) est dans la position de réalimentation, si le système de commande de frein de locomotive est dans le mode inactif, le système de commande de conduite d'équilibrage de cylindre de frein (002) délivre la pression de conduite d'équilibrage de cylindre de frein selon la pression de soupape de distribution mécanique (2), et le système de commande de cylindre de frein (001) délivre la pression de cylindre de frein (5) selon la pression de soupape de distribution mécanique (2) et la pression de conduite d'équilibrage de cylindre de frein ;
lorsque le répartiteur (101) est dans la position de coupure, si le système de commande de frein de locomotive est normal, le système de commande de cylindre de frein (001) délivre la pression de cylindre de frein (5) selon la pression de soupape de distribution électronique et la pression de conduite d'équilibrage de cylindre de frein à partir de l'unité meneuse ; si le système de commande de frein de locomotive n'est plus alimenté ou est défaillant, le système de commande de cylindre de frein (001) délivre la pression de cylindre de frein (5) selon la pression de soupape de distribution mécanique (2) et la pression de conduite d'équilibrage de cylindre de frein à partir de l'unité meneuse.

2. Système de commande de frein de locomotive selon la revendication 1, **caractérisé en ce que**, lorsque le répartiteur (101) est dans la position de réalimentation, un orifice d'entrée du répartiteur (1011) est relié à un orifice de sortie du répartiteur (1012), et lorsque le répartiteur (101) est dans la position de coupure, l'orifice de sortie du répartiteur (1012) est relié à un orifice d'échappement du répartiteur (1013) ; l'orifice d'entrée du répartiteur (1011) est relié à une conduite de réservoir principal (1), l'orifice de sortie du répartiteur (1012) est relié au système de commande de conduite d'équilibrage de cylindre de frein (002), et l'orifice d'échappement du répartiteur (1013) est relié à l'atmosphère (3).

3. Système de commande de frein de locomotive selon la revendication 2, **caractérisé en ce que**, le système de commande de cylindre de frein (001) comprend une unité de précommande de pression de cylindre de frein (102), une première soupape électromagnétique (103), une soupape à deux voies (104) et une soupape relais de cylindre de frein (105) ; un orifice d'entrée (1021) de l'unité de précommande de pression de cylindre de frein (102) est relié à la conduite de réservoir principal (1), et un orifice de sortie (1022) de l'unité de précommande de pression de cylindre de frein (102) est relié à un premier orifice d'entrée (1031) de la première soupape électromagnétique (103) ; un deuxième orifice d'entrée (1032) de la première soupape électromagnétique (103) est relié à la pression de soupape de distribution mécanique (2), et un orifice de sortie (1033) de la première soupape électromagnétique (103) est relié à un premier orifice d'entrée (1041) de la soupape à deux voies (104) ; un orifice de sortie (1043) de la soupape à deux voies (104) est relié à un orifice de précommande (1051) de la soupape relais de cylindre de frein (105), un orifice d'entrée (1052) de la soupape relais de cylindre de frein (105) est relié à la conduite de réservoir principal (1), un orifice de sortie (1053) de la soupape relais de cylindre de frein (105) est relié à une conduite de cylindre de frein, et un orifice d'échappement (1054) de la soupape relais de cylindre de frein (105) est relié à l'atmosphère (3).

4. Système de commande de frein de locomotive selon la revendication 3, **caractérisé en ce que**, le système de commande de conduite d'équilibrage de cylindre de frein (002) comprend une unité de précommande de pression de conduite d'équilibrage de cylindre de frein, une deuxième soupape électromagnétique (107) et une soupape relais de conduite d'équilibrage de cylindre de frein (109) ; un orifice d'entrée (1061) de l'unité de précommande de pression de conduite d'équilibrage de cylindre de frein (106) est relié à l'orifice de sortie du répartiteur (1012), un orifice de sortie (1062) de l'unité de précommande de pression de conduite d'équilibrage de cylindre de frein (106) est relié à un premier orifice d'entrée (1071) de la deuxième soupape électromagnétique (107), un deuxième orifice d'entrée (1072) de la deuxième soupape électromagnétique (107) est relié à l'orifice de sortie (1033) de la première soupape électromagnétique (103), un orifice de sortie (1073) de la deuxième soupape électromagnétique (107) est relié à un orifice de précommande (1091) de la soupape relais de conduite d'équilibrage de cylindre de frein (109), un orifice d'entrée (1092) de la soupape relais de conduite d'équilibrage de cylindre de frein (109) est relié à la conduite de réservoir principal (1), un orifice d'échappement (1093) de la soupape relais de conduite d'équilibrage de cylindre de frein (109) est relié à l'atmosphère (3).

5. Système de commande de frein de locomotive selon la revendication 4, **caractérisé en ce que**, le système de commande de conduite d'équilibrage de cylindre de frein (002) comprend également une troisième soupape électromagnétique (108) et une soupape de commande pneumatique (110) ; un orifice d'entrée (1081) de la troisième soupape électromagnétique (108) est relié à l'orifice de sortie du répartiteur (1012), un orifice de sortie (1082) de la troisième soupape électromagnétique (108) est relié à un orifice de précommande (1102) de la soupape de commande pneumatique (110) ; un orifice d'entrée (1101) de la soupape de commande pneumatique (110) est relié à un orifice de sortie (1094) de la soupape relais de conduite d'équilibrage de cylindre de frein (109), un orifice de sortie (1103) de la soupape de commande pneumatique (110) est relié à une conduite d'équilibrage de cylindre de frein (8), et la conduite d'équilibrage de cylindre de frein (8) est reliée à un deuxième orifice d'entrée (1042) de la soupape à deux voies (104).

6. Système de commande de frein de locomotive selon la revendication 5, **caractérisé en ce que**, lorsque la première soupape électromagnétique (103) et la deuxième soupape électromagnétique (107) sont excitées, la troisième soupape électromagnétique (108) est désexcitée, et le répartiteur (101) est réglé à la position de réalimentation, la conduite de réservoir principal (1) fournit une pression d'air principale à l'unité de précommande de pression de cylindre de frein (102), et l'unité de précommande de pression de cylindre de frein (102) délivre la pression de soupape de distribution électronique selon un changement de pression de conduite générale ; la pression de soupape de distribution électronique est fournie à la soupape relais de cylindre de frein (105) après passage à travers la première soupape électromagnétique (103) et la soupape à deux voies (104), la soupape relais de cylindre de frein (105) amplifie le flux de la pression de soupape de distribution électronique et délivre la pression de cylindre de frein (5) ; dans le même temps, la pression d'air principale à partir de la conduite de réservoir principal (1) entre dans l'orifice de précommande (1102) de la soupape de commande pneumatique (110) par l'intermédiaire du répartiteur (101) et de la troisième soupape électromagnétique (108), et commande l'ouverture de la soupape de commande pneumatique (110) ; l'unité de précommande de pression de conduite d'équilibrage de cylindre de frein (106) reçoit la pression d'air principale à partir de la conduite de réservoir principal (1) par l'intermédiaire du répartiteur (101), et délivre la pression de précommande de conduite d'équilibrage de cylindre de frein, la pression de précommande de conduite d'équilibrage de cylindre de frein est fournie à la soupape relais de conduite d'équilibrage de cylindre de frein (109) après passage à travers la deuxième soupape électromagnétique (107), la pression de précommande de conduite d'équilibrage de cylindre de frein est amplifiée en flux par la soupape relais de conduite d'équilibrage de cylindre de frein (109) et est fournie à la soupape de commande pneumatique (110) pour délivrer la pression de conduite d'équilibrage de cylindre de frein.

7. Système de commande de frein de locomotive selon la revendication 5, **caractérisé en ce que**, lorsque la première soupape électromagnétique (103), la deuxième soupape électromagnétique (107) et la troisième soupape électromagnétique (108) sont toutes désexcitées et le répartiteur (101) est réglé à la position de réalimentation, la pression de soupape de distribution mécanique (2) est fournie au premier orifice d'entrée (1041) de la soupape à deux voies (104) par l'intermédiaire de le première soupape électromagnétique (103), et est également fournie à la soupape relais de conduite d'équilibrage de cylindre de frein (109) par l'intermédiaire de la première soupape électromagnétique (103) et de la deuxième soupape électromagnétique (107) ; la pression d'air principale à partir de la conduite de réservoir principal (1) entre dans l'orifice de précommande (1102) de la soupape de commande pneumatique (110) par l'intermédiaire du répartiteur (101) et de la troisième soupape électromagnétique (108), et commande l'ouverture de la soupape de commande pneumatique (110) ; la pression de soupape de distribution mécanique (2) est amplifiée en flux par la soupape relais de conduite d'équilibrage de cylindre de frein (109) et est fournie à la soupape de commande pneumatique (110) pour délivrer la pression de conduite d'équilibrage de cylindre de frein, la pression de conduite d'équilibrage de cylindre de frein est fournie au deuxième orifice d'entrée (1042) de la soupape à deux voies (104) par l'intermédiaire de la conduite d'équilibrage de cylindre de frein (8) ; la soupape à deux voies (104) délivre de la pression par l'intermédiaire de l'orifice de sortie (1043) de la soupape à deux voies (104) selon la pression de soupape de distribution mécanique (2) fournie par l'intermédiaire du premier orifice d'entrée (1041) de la soupape à deux voies (104) et la pression de conduite d'équilibrage de cylindre de frein fournie par l'intermédiaire du deuxième orifice d'entrée (1042) de la soupape à deux voies (104), la soupape relais de cylindre de frein (105) amplifie le flux de la pression délivrée à partir de l'orifice de sortie (1043) de la soupape à deux voies (104), puis délivre la pression de cylindre de frein (5).

8. Système de commande de frein de locomotive selon la revendication 5, **caractérisé en ce que**, lorsque la première soupape électromagnétique (103), la deuxième soupape électromagnétique (107) et la troisième soupape électromagnétique (108) sont toutes excitées et le répartiteur (101) est réglé à la position de coupure, la pression de conduite d'équilibrage de cylindre de frein à partir de l'unité meneuse est fournie à l'orifice de précommande (1051) de la soupape relais de cylindre de frein (105) par l'intermédiaire de la conduite d'équilibrage de cylindre de frein (8) via le deuxième orifice d'entrée (1042) de la soupape à deux voies (104), et la soupape relais de cylindre de frein (105) amplifie le flux de la pression de conduite d'équilibrage de cylindre de frein, puis délivre la pression de cylindre de frein (5).

9. Système de commande de frein de locomotive selon la revendication 5, **caractérisé en ce que**, lorsque la première soupape électromagnétique (103), la deuxième soupape électromagnétique (107) et la troisième soupape électromagnétique (108) sont toutes désexcitées et le répartiteur (101) est réglé à la position de coupure, la pression de soupape de distribution mécanique (2) est fournie au premier orifice d'entrée (1041) de la soupape à deux voies (104) par l'intermédiaire de le première soupape électromagnétique (103), la pression de conduite d'équilibrage de cylindre de frein à partir de l'unité meneuse est fournie au deuxième orifice d'entrée (1042) de la soupape à deux voies (104) par l'intermédiaire de la conduite d'équilibrage de cylindre de frein (8), et la soupape à deux voies (104) délivre de la pression par l'intermédiaire de l'orifice de sortie (1043) de la soupape à deux voies (104) selon la pression de soupape de distribution mécanique (2) fournie par l'intermédiaire du premier orifice d'entrée (1041) de la soupape à deux voies (104) et la pression de conduite d'équilibrage de cylindre de frein fournie par l'intermédiaire du deuxième orifice d'entrée (1042) de la soupape à deux voies (104), et la soupape relais de cylindre de frein (105) amplifie le flux de la pression délivrée à partir de l'orifice de sortie (1043) de la soupape à deux voies (104), puis délivre la pression de cylindre de frein (5).

10. Procédé de commande de frein de locomotive, qui est appliqué au système de commande de frein de locomotive selon l'une quelconque des revendications 1 à 9, le procédé de commande de frein de locomotive étant **caractérisé en ce qu'**il comprend :
lorsque le système de commande de frein de locomotive est dans le mode meneur, le réglage du répartiteur (101) à la position de réalimentation, si le système de commande de frein de locomotive est normal, le système de commande de cylindre de frein (001) dans le système de commande de frein de locomotive délivre la pression de cylindre de frein (5) selon la pression de soupape de distribution électronique, et le système de commande de conduite d'équilibrage de cylindre de frein (002) délivre la pression de conduite d'équilibrage de cylindre de frein selon la pression de précommande de conduite d'équilibrage de cylindre de frein ; si le système de commande de frein de locomotive n'est plus alimenté ou est défaillant, le système de commande de conduite d'équilibrage de cylindre de frein (002) délivre la pression de conduite d'équilibrage de cylindre de frein selon la pression de soupape de distribution mécanique (2), et le système de commande de cylindre de frein (001) délivre la pression de cylindre de frein (5) selon la pression de soupape de distribution mécanique (2) et la pression de conduite d'équilibrage de cylindre de frein ;
lorsque le système de commande de frein de locomotive est dans le mode inactif, le réglage du répartiteur (101) à la position de réalimentation, le système de commande de conduite d'équilibrage de cylindre de frein (002) délivre la pression de conduite d'équilibrage de cylindre de frein selon la pression de soupape de distribution mécanique (2), et le système de commande de cylindre de frein (001) délivre la pression de cylindre de frein (5) selon la pression de soupape de distribution mécanique (2) et la pression de conduite d'équilibrage de cylindre de frein ;
lorsque le système de commande de frein de locomotive est dans le mode mené, le réglage du répartiteur (101) à la position de coupure, si le système de commande de frein de locomotive est normal, le système de commande de cylindre de frein (001) commande la pression de soupape de distribution électronique pour une diminution à 0 kPa, et le système de commande de cylindre de frein (001) délivre la pression de cylindre de frein (5) selon la pression de conduite d'équilibrage de cylindre de frein à partir de l'unité meneuse ; si le système de commande de frein de locomotive n'est plus alimenté ou est défaillant, le système de commande de cylindre de frein (001) délivre la pression de cylindre de frein (5) selon la pression de soupape de distribution mécanique (2) et la pression de conduite d'équilibrage de cylindre de frein à partir de l'unité meneuse.

11. Procédé de commande de frein de locomotive selon la revendication 10, **caractérisé en ce que** : lorsque le système de commande de frein de locomotive est dans le mode meneur, avec le réglage du répartiteur (101) à la position de réalimentation, si le système de commande de frein de locomotive est normal, une ou la première soupape électromagnétique (103) du système de commande de cylindre de frein (001) et une ou la deuxième soupape électromagnétique (107) du système de commande de conduite d'équilibrage de cylindre de frein (002) sont excitées, et une ou la troisième soupape électromagnétique (108) du système de commande de conduite d'équilibrage de cylindre de frein (002) est désexcitée, une ou l'unité de précommande de pression de cylindre de frein (102) du système de commande de cylindre de frein (001) délivre la pression de soupape de distribution électronique selon un changement de pression de conduite générale, et la pression de soupape de distribution électronique est amplifiée en flux par une ou la soupape relais de cylindre de frein (105) du système de commande de cylindre de frein (001) pour délivrer la pression de cylindre de frein (5) ; dans le même temps, la pression d'air principale à partir d'une conduite de réservoir principal (1) entre dans un orifice de précommande (1102) d'une ou de la soupape de commande pneumatique (110) du système de commande de conduite d'équilibrage de cylindre de frein (002) par l'intermédiaire du répartiteur (101), et commande l'ouverture de la soupape de commande pneumatique (110), la pression de précommande de conduite d'équilibrage de cylindre de frein délivrée par une ou l'unité de précommande de pression de conduite d'équilibrage de cylindre de frein (106) du système de commande de conduite d'équilibrage de cylindre de frein (002) est amplifiée en flux par une ou la soupape relais de conduite d'équilibrage de cylindre de frein (109) du système de commande de conduite d'équilibrage de cylindre de frein (002) et est fournie à la soupape de commande pneumatique (110) pour délivrer la pression de conduite d'équilibrage de cylindre de frein.

12. Procédé de commande de frein de locomotive selon la revendication 11, **caractérisé en ce que** :
lorsque le système de commande de frein de locomotive est dans le mode meneur, avec le réglage du répartiteur (101) à la position de réalimentation, si le système de commande de frein de locomotive n'est plus alimenté ou est défaillant, la première soupape électromagnétique (103), la deuxième soupape électromagnétique (107) et la troisième soupape électromagnétique (108) sont toutes désexcitées, et la pression de soupape de distribution mécanique (2) change en réaction à un changement de la pression de cylindre de frein et entre dans un premier orifice d'entrée (1041) d'une ou de la soupape à deux voies (104) du système de commande de cylindre de frein (001) ; dans le même temps, la pression d'air principal à partir de la conduite de réservoir principal (1) entre dans un orifice de précommande (1102) de la soupape de commande pneumatique (110) par l'intermédiaire du répartiteur (101), et commande l'ouverture de la soupape de commande pneumatique (110) ; la pression de soupape de distribution mécanique (2) est amplifiée en flux par la soupape relais de conduite d'équilibrage de cylindre de frein (109) et est fournie à la soupape de commande pneumatique (110) pour délivrer la pression de conduite d'équilibrage de cylindre de frein ; la pression de conduite d'équilibrage de cylindre de frein entre dans l'unité menée d'une part, et entre dans un deuxième orifice d'entrée (1042) de la soupape à deux voies (104) d'autre part ; la pression délivrée à partir d'un orifice de sortie (1043) de la soupape à deux voies (104) est amplifiée en flux par la soupape relais de cylindre de frein (105) pour délivrer la pression de cylindre de frein (5).

13. Procédé de commande de frein de locomotive selon la revendication 10, **caractérisé en ce que**, lorsque le système de commande de frein de locomotive est dans le mode inactif, avec le réglage du répartiteur (101) à la position de réalimentation, une ou la première soupape électromagnétique (103) du système de commande de cylindre de frein (001), une ou la deuxième soupape électromagnétique (107) du système de commande de conduite d'équilibrage de cylindre de frein (002) et une ou la troisième soupape électromagnétique (108) du système de commande de conduite d'équilibrage de cylindre de frein (002) sont toutes désexcitées, et la pression de soupape de distribution mécanique (2) change en réaction à un changement de la pression de conduite générale et entre dans un premier orifice d'entrée (1041) de la soupape à deux voies (104) du système de commande de cylindre de frein (001) ; dans le même temps, la pression d'air principal à partir de la conduite de réservoir principal (1) entre dans un orifice de précommande (1102) d'une ou de la soupape de commande pneumatique (110) du système de commande de conduite d'équilibrage de cylindre de frein (002) par l'intermédiaire du répartiteur (101), et commande l'ouverture de la soupape de commande pneumatique (110) ; la pression de soupape de distribution mécanique (2) est amplifiée en flux par une ou la soupape relais de conduite d'équilibrage de cylindre de frein (109) du système de commande de conduite d'équilibrage de cylindre de frein (002) et est fournie à la soupape de commande pneumatique (110) pour délivrer la pression de conduite d'équilibrage de cylindre de frein ; la pression de conduite d'équilibrage de cylindre de frein entre dans l'unité menée d'une part, et entre dans un deuxième orifice d'entrée (1042) de la soupape à deux voies (104) d'autre part ; la pression délivrée à partir de l'orifice de sortie (1043) de la soupape à deux voies (104) est amplifiée en flux par une ou la soupape relais de cylindre de frein (105) du système de commande de cylindre de frein (001) pour délivrer la pression de cylindre de frein (5).

14. Procédé de commande de frein de locomotive selon la revendication 10, **caractérisé en ce que**, lorsque le système de commande de frein de locomotive est dans le mode mené, avec le réglage du répartiteur (101) à la position de coupure, si le système de commande de frein de locomotive est normal, une ou la première soupape électromagnétique (103) du système de commande de cylindre de frein (001), une ou la deuxième soupape électromagnétique (107) du système de commande de conduite d'équilibrage de cylindre de frein (002), et une ou la troisième soupape électromagnétique (108) du système de commande de conduite d'équilibrage de cylindre de frein (002) sont toutes excitées, et une ou l'unité de précommande de pression de cylindre de frein (102) du système de commande de cylindre de frein (001) commande la pression de soupape de distribution électronique pour une diminution à 0 kPa, et la pression de soupape de distribution électronique entre dans un premier orifice d'entrée (1041) de la soupape à deux voies (104) du système de commande de cylindre de frein (001) ; une ou l'unité de précommande de pression de conduite d'équilibrage de cylindre de frein (106) du système de commande de conduite d'équilibrage de cylindre de frein (002) commande la pression de précommande de conduite d'équilibrage de cylindre de frein pour une diminution à 0 kPa ; la pression au niveau de l'orifice de précommande (1102) d'une ou de la soupape de commande pneumatique (110) du système de commande de conduite d'équilibrage de cylindre de frein (002) est évacuée dans l'atmosphère (3) par l'intermédiaire du répartiteur (101), et la soupape de commande pneumatique (110) est dans un état fermé ; la pression de conduite d'équilibrage de cylindre de frein à partir de l'unité meneuse entre dans un deuxième orifice d'entrée (1042) de la soupape à deux voies (104), la pression au niveau du deuxième orifice d'entrée (1042) de la soupape à deux voies (104) entre dans un orifice de précommande (1051) d'une ou de la soupape relais de cylindre de frein (105) du système de commande de cylindre de frein (001), et la pression de cylindre de frein (5) est délivrée au cylindre de frein de l'unité menée après amplification de flux de la soupape relais de cylindre de frein (105).

15. Procédé de commande de frein de locomotive selon la revendication 14, **caractérisé en ce que**, lorsque le système de commande de frein de locomotive est dans le mode mené, avec le réglage du répartiteur (101) à la position de coupure, si le système de commande de frein de locomotive n'est plus alimenté ou est défaillant, la première soupape électromagnétique (103), la deuxième soupape électromagnétique (107), et la troisième soupape électromagnétique (108) sont toutes désexcitées, et la pression de soupape de distribution mécanique (2) change en réaction à un changement de la pression de conduite générale ; la pression de soupape de distribution mécanique (2) entre dans le premier orifice d'entrée (1041) de la soupape à deux voies (104) d'une part, et entre dans un orifice de précommande (1091) d'une ou de la soupape relais de conduite d'équilibrage de cylindre de frein (109) du système de commande de conduite d'équilibrage de cylindre de frein (002) d'autre part ; la pression au niveau de l'orifice de précommande (1102) de la soupape de commande pneumatique (110) est évacuée dans l'atmosphère (3) par l'intermédiaire du répartiteur (101), et la soupape de commande pneumatique (110) est dans un état fermé ; la pression de conduite d'équilibrage de cylindre de frein à partir de l'unité meneuse entre dans le deuxième orifice d'entrée (1042) de la soupape à deux voies (104), la pression délivrée à partir de l'orifice de sortie (1043) de la soupape à deux voies (104) entre dans l'orifice de précommande (1051) de la soupape relais de cylindre de frein (105), et la pression de cylindre de frein (5) de l'unité menée est délivrée après amplification de flux.
